# EUROPEAN PATENT SPECIFICATION

(11) **EP 4 307 644 B1**
(45) Date of publication and mention of the grant of the patent: **24.09.2025**
(21) Application number: 23159702.2
(22) Date of filing: 02.03.2023
(51) Int. Cl.: H04L 67/10, H04L 67/12, H04L 67/00, H04L 67/51

(54) **SERVICE ACTIVATION MANAGEMENT METHOD, APPARATUS AND SYSTEM, DEVICE, AND STORAGE MEDIUM**
VERFAHREN, VORRICHTUNG UND SYSTEM ZUR DIENSTAKTIVIERUNGSVERWALTUNG, VORRICHTUNG UND SPEICHERMEDIUM
PROCÉDÉ, APPAREIL ET SYSTÈME DE GESTION D'ACTIVATION DE SERVICE, DISPOSITIF ET SUPPORT DE STOCKAGE

(30) Priority: 04.07.2022 CN 202210785848
(43) Date of publication of application: 17.01.2024
(73) Proprietor: Chongqing Changan Automobile Co., Ltd., Chongqing 400023 (CN)
(72) Inventor: HAO, Jinlong, Chongqing, 400023 (CN); HAN, Sanchu, Chongqing, 400023 (CN); LIANG, Sishuo, Chongqing, 400023 (CN)
(74) Representative: Dennemeyer & Associates S.A.

(56) References cited:
- CN-A- 106 385 405
- CN-A- 109 726 528
- CN-A- 113 449 269

## Description

### Field of the Invention

The present application relates to the technical field of vehicles, and in particular, to a service activation management method, apparatus and system, a device, and a storage medium.

Prior art in this technical field is disclosed in documents CN 109 726 528 A, CN 106 385 405 A and CN 113 449 269 A.

### Background of the Invention

Software-defined vehicles are a possible development trend for future vehicles. A vehicle can be a high intelligent product combining hardware and software, in which the hardware can be understood as the vehicle entity on which basis corresponding software can be carried to implement functions and services such as large data recommendation, automatic driving, automatic parking, and so on. A user may subscribe to his/her favorite services on a vehicle, which in turn will create technical requirements for subscription and activation, service provision, charge management, etc.

In the related art, service activation for vehicles still uses the concept of service activation for devices such as mobile phones, which does not fit the special application scenarios of vehicles. For example, in an application scenario in a vehicle , a user may activate various clients, such as a mobile phone-side APP, a cloud-side service, a vehicle-side application, etc. When the user subscribes a vehicle function at one side, for example, the mobile phone-side APP, the function is considered to have been successfully subscribed. The inventors have found that in this service subscription scenario, in particular, in a case where relevant interfaces of a vehicle-side service have been configured in advance, when a user subscribes activates the service, it is possible to occur that a cloud-side supporting service is actually not activated, but a vehicle-side interface, such as some display buttons, can already be viewed, that is to say, there is a problem that the activation of the vehicle-side service and the cloud-side service are not synchronized. When the user urgently wants to use the subscribed service at the vehicle side, but finds that the service cannot be used, for example, a control display button cannot trigger a corresponding service, the user experience is satisfactory, and the user may even experience negative emotions such as distrust on the service, etc. It is therefore desirable to provide a management method applicable in service activation scenarios.

### Summary of the Invention

In view of the above defects in the prior art, the present disclosure provides a service activation management method, apparatus and system, a device, and a storage medium to solve the above-mentioned technical problems.

In a first aspect, a service activation management method according to the invention is defined in claim 1 and includes:
acquiring service activation information of a target vehicle, and generating cloud-side activation information and vehicle-side activation information according to the service activation information;
activating a cloud-side supporting service of a vehicle-side service based on the cloud-side activation information; and
generating a vehicle-side service activation instruction for activating the vehicle-side service of the target vehicle based on the vehicle-side activation information when the cloud-side supporting service is successfully activated, so as to manage service activation of the target vehicle.

In an embodiment of the present disclosure, the activating a cloud-side supporting service of a vehicle-side service based on the cloud-side activation information, includes at least one of:
determining a service upgrade package of the vehicle-side service, and installing the service upgrade package to enable the target vehicle to activate the vehicle-side service; and
controlling a service interface of the vehicle-side service to be enabled.

In an embodiment of the present disclosure, the generating a vehicle-side service activation instruction for activating the vehicle-side service of the target vehicle based on the vehicle-side activation information, includes:
acquiring a vehicle start state of the target vehicle; and
if the vehicle start state includes startup, triggering the generating a vehicle-side service activation instruction according to the vehicle-side activation information.

According to the invention, after the generating a vehicle-side service activation instruction for activating the vehicle-side service of the target vehicle based on the vehicle-side activation information, the method further includes:
acquiring a service use request by the target vehicle for the vehicle-side service, and determining use parameters of the vehicle-side service;
if the use parameters satisfy a preset use condition, starting the vehicle-side service; and
if the use parameters do not satisfy the preset use condition, prompting a user to renew service subscription, and determining a next service activation action according to a renewal result of service subscription, the renewal result of service subscription including renewed or not renewed.

In an embodiment of the present disclosure, the determining a next service activation action according to a renewal result of service subscription, includes:
if the renewal result of service subscription includes renewed, generating new service activation information to activate the vehicle-side service again; and
if the renewal result of service subscription includes not renewed, generating a deactivation message to disable the vehicle-side service.

In a second aspect, a service activation management method includes:
acquiring a service subscription request for a vehicle-side service, the service subscription request including request customer information and request vehicle information; and
if the request customer information satisfies a preset customer condition and the request vehicle information satisfies a preset vehicle condition, providing prompts and guidance to generate a service request order including service activation information.

In a third aspect, a service activation management method includes:
acquiring a vehicle-side service activation instruction which includes vehicle-side service identification information, and determining a historical activation state of a vehicle-side service of a target vehicle according to the vehicle-side service identification information; and
if the historical activation state includes unactivated, sending the vehicle-side service activation instruction to the target vehicle to enable the target vehicle to activate the vehicle-side service of the target vehicle according to the vehicle-side service activation instruction.

In an embodiment of the present disclosure, the activating the vehicle-side service of the target vehicle according to the vehicle-side service activation instruction, includes at least one of:
acquiring a service upgrade package of the vehicle-side service, and controlling the service upgrade package to be installed on the target vehicle so as to activate the vehicle-side service; and
controlling a service interface of the vehicle-side service to be operational.

In an embodiment of the present disclosure, after the activating the vehicle-side service of the target vehicle according to the vehicle-side service activation instruction, the method further includes at least one of:
acquiring and sending a vehicle-side activation result of the vehicle-side service, the vehicle-side activation result including activation completed or activation failed;
if the vehicle-side service is to be used, sending a function use request and acquiring a vehicle-side function activation state of the vehicle-side function, and if the vehicle-side function activation state includes activated, executing the vehicle-side service; and
acquiring use parameters of the vehicle-side service, and storing the use parameters in a preset data storage space.

In a fourth aspect, a cloud-side service subscription and activation apparatus includes:
a service activation information acquisition module configured to acquire service activation information of a target vehicle, and generate cloud-side activation information and vehicle-side activation information according to the service activation information;
a cloud-side activation module configured to activate a cloud-side supporting service of a vehicle-side service based on the cloud-side activation information; and
a vehicle-side service activation instruction generation module configured to generate a vehicle-side service activation instruction for activating the vehicle-side service of the target vehicle based on the vehicle-side activation information when the cloud-side supporting service is successfully activated, so as to manage service activation of the target vehicle.

In a fifth aspect, a digital product ordering apparatus for an intelligent connected vehicle includes:
a service subscription request acquisition module configured to acquire a service subscription request for a vehicle-side service, the service subscription request including request customer information and request vehicle information; and
a service request order generation module configured to, if the request customer information satisfies a preset customer condition and the request vehicle information satisfies a preset vehicle condition, provide prompts and guidance to generate a service request order including service activation information.

In a sixth aspect, a vehicle-side activation apparatus includes:
a historical activation state determination module configured to acquire a vehicle-side service activation instruction which includes vehicle-side service identification information, and determine a historical activation state of a vehicle-side service of a target vehicle according to the vehicle-side service identification information; and
a vehicle-side activation module configured to, if the historical activation state includes unactivated, send the vehicle-side service activation instruction to the target vehicle to enable the target vehicle to activate the vehicle-side service of the target vehicle according to the vehicle-side service activation instruction.

In a seventh aspect, a service activation management system according to the invention is defined in claim 9 and includes at least one of:
the cloud-side service subscription and activation apparatus as described in the fourth aspect, the digital product ordering apparatus for an intelligent connected vehicle as described in the fifth aspect, and the vehicle-side activation apparatus as described in the sixth aspect.

In an embodiment of the present disclosure, if the system includes the service activation management apparatus as described in the fourth, fifth and sixth aspects, the system further includes:
an activation state acquisition module configured to acquire a cloud-side activation state of the cloud-side activation module as described in the fourth aspect, a service request order state of the service request order generation module as described in the fifth aspect, and a vehicle-side activation state of the vehicle-side activation module as described in the sixth aspect; and
an auditing module configured to, if the cloud-side activation state, the service request order state and the vehicle-side activation state are inconsistent, providing a prompt for checking or processing according to a preset processing rule.

In an embodiment of the present disclosure, the system further includes at least one of a service shelving module, a client, and a target vehicle, wherein:
the service shelving module is configured to record service information of a vehicle-side service, and configure the cloud-side activation module and the vehicle-side activation module so that the cloud-side activation module activates a cloud-side supporting service of the vehicle-side service according to cloud-side activation information, and the vehicle-side activation module activates the vehicle-side service of the target vehicle according to a vehicle-side service activation instruction;
the client is configured to perform at least one of displaying commodity information of the vehicle-side service, and enabling a user to confirm a service request order, pay an order and view use parameters;
the target vehicle is configured to activate the vehicle-side service according to the vehicle-side service activation instruction.

In an eighth aspect, an electronic device includes:
one or more processors;
a memory for storing one or more programs which, when executed by the one or more processors, cause the electronic device to implement the service activation management method described in any one of the embodiments above.

In a ninth aspect, a computer-readable storage medium has stored thereon a computer program which, when executed by a processor of a computer, causes the computer to execute the service activation management method described in any one of the embodiments above.

The present disclosure has the following beneficial effects: according to the service activation management method, apparatus and system, the device and the storage medium provided in the present disclosure, service activation information is acquired and split into cloud-side activation information and vehicle-side activation information; a cloud-side supporting service of a vehicle-side service is activated according to the cloud-side activation information; and if the cloud-side supporting service is successfully activated, a vehicle-side service activation instruction for activating the vehicle-side service of the target vehicle is generated according to the vehicle-side activation information, so as to manage the service activation of the target vehicle. In this way, unsatisfactory user experience caused by asynchronous activation of vehicle-side and cloud-side services can be prevented, thereby better fitting the needs of the application scenario of vehicle service subscription.

It is to be understood that both the foregoing general description and the following detailed description are merely exemplary and explanatory, and should not be construed as limiting the present application.

### Brief Description of the Drawings

The accompanying drawings, which are incorporated in and constitute a part of this specification, illustrate embodiments consistent with the present application and, together with the description, serve to explain the principles of the present application. It is obvious that the figures in the following description are only some embodiments of the present application, and a person skilled in the art may obtain other figures according to these figures without involving any inventive effort. In the drawings:
Fig. 1 is a schematic diagram illustrating an environment for implementing a service activation management method in accordance with an exemplary embodiment of the present application;
Fig. 2 is a flowchart illustrating a service activation management method in accordance with an exemplary embodiment of the present application;
Fig. 3 is a flowchart illustrating two service activation processes in accordance with an exemplary embodiment of the present application;
Fig. 4 is another flowchart illustrating a service activation management method in accordance with an exemplary embodiment of the present application;
Fig. 5 is a flowchart illustrating a service activation management method in accordance with another exemplary embodiment of the present application;
Fig. 6 is a flowchart illustrating service shelving in accordance with an exemplary embodiment of the present application;
Fig. 7 is a flowchart illustrating a service activation management method in accordance with another exemplary embodiment of the present application;
Fig. 8 is a block diagram of a cloud-side service subscription and activation apparatus in accordance with an exemplary embodiment of the present application;
Fig. 9 is a block diagram of a digital product ordering apparatus for an intelligent connected vehicle in accordance with an exemplary embodiment of the present application;
Fig. 10 is a block diagram of an vehicle-side activation apparatus in accordance with an exemplary embodiment of the present application;
Fig. 11 is a block diagram of a service activation management system in accordance with an exemplary embodiment of the present application;
Fig. 12 is a flowchart illustrating an auditing process in accordance with an exemplary embodiment of the present application;
Fig. 13 is a block diagram of a service activation management system in accordance with another exemplary embodiment of the present application;
Fig. 14 is a flowchart illustrating an example of a user service ordering, subscription and activation process in accordance with an exemplary embodiment of the present application; and
Fig. 15 illustrates a block diagram of a computer system suitable for implementing an electronic device in accordance with an embodiment of the present application.

### Detailed Description of the Embodiments

Embodiments of the of the present application will be described with reference to the accompanying drawings and preferred embodiments. Additional advantages and benefits of the present invention will become readily apparent to those skilled in the art from the present disclosure. The present disclosure may also be implemented or applied by other different specific embodiments, and various details in this specification may also be modified or changed without departing from the spirit of the present disclosure based on different viewpoints and applications. It is to be understood that the preferred embodiments are merely illustrative of the present disclosure and are not intended to limit the scope of the present disclosure.

It is be noted that the figures provided in the following embodiments merely illustrate the basic idea of the present disclosure in a schematic way, and thus only the components related to the present disclosure are shown in the figures rather than being drawn according to the numbers, shapes and sizes of the components in an actual implementation. In an actual implementation, the types, numbers and proportions of the components may be arbitrarily changed, and the layout of the components may be more complicated.

In the following description, numerous details are set forth in order to provide a thorough explanation of embodiments of the present disclosure. However, it will be apparent to those skilled in the art that embodiments of the present disclosure may be practiced without these specific details. In other embodiments, well-known structures and devices are shown in the form of block diagrams, rather than in detail, in order to avoid obscuring the embodiments of the present disclosure.

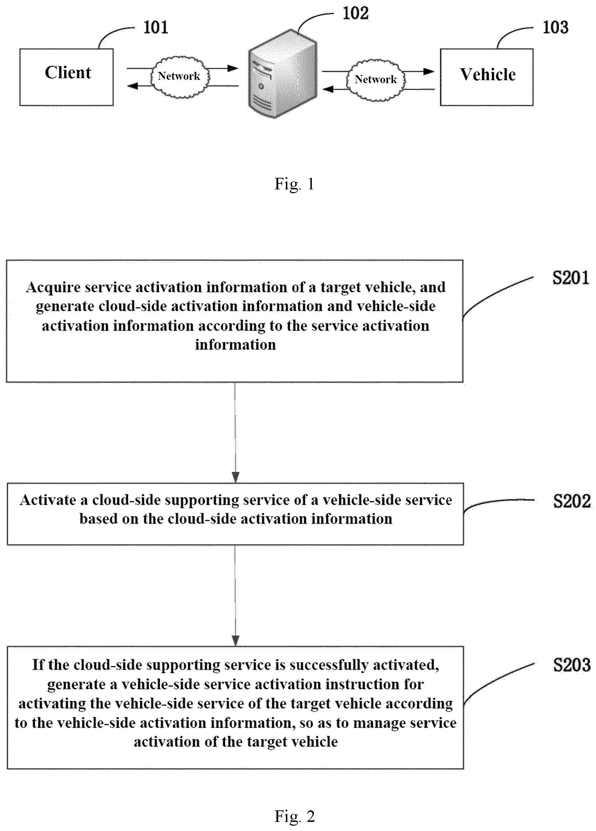

Fig. 1 is a schematic diagram illustrating an environment for implementing a service activation management method in accordance with an exemplary embodiment of the present application. As shown in Fig. 1, a server 102 (cloud side) communicates with a client 101 (user side) and a vehicle-mounted terminal provided in a vehicle 103 (vehicle-side) via a network. Devices for implementing the client 101 include, but are not limited to, any terminal devices that support service activation management software, such as personal computers, notebook computers, smart phones, tablets, and portable wearable devices. The client 101 is installed with network terminal software, for example, a PC website, a mobile phone website, an APP, a iOS APP, a WeChat applet, a smart watch APP, a smart car APP, and other smart hardware applications. The server 102 may be implemented as a stand-alone server or as a server cluster of multiple servers, which server/server cluster may be, for example, a Telematics service provider (TSP) server. A vehicle-mounted terminal Telematics BOX (T-BOX) is provided in the vehicle, and the vehicle-mounted terminal also communicates with a vehicle control unit (VCU) in the vehicle. The server/server cluster may also be a cloud server providing basic cloud computing services, such as cloud-side services, cloud databases, cloud computing, cloud functions, cloud storage, network services, cloud communication, middleware services, domain name services, security services, CDN (Content Delivery Network), and large data and artificial intelligence platforms, without being limited thereto. The client 101 may communicate with the server 102 through a wireless network such as 3G (3rd generation mobile information technology), 4G (4th generation mobile information technology), 5G (5th generation mobile information technology), and so on, without being limited thereto.

Software-defined vehicles are a possible development trend for future vehicles. A vehicle can be a high intelligent product combining hardware and software, in which the hardware can be understood as the vehicle entity on which basis corresponding software can be carried to implement functions and services such as large data recommendation, automatic driving, automatic parking, and so on. A user may subscribe to his/her favorite services on a vehicle, which in turn will create technical requirements for subscription and activation, service provision, charge management, etc. How to enable users to have efficient and stable subscription, payment, activation and enjoyment of services at the terminal side (client side and vehicle side) is an important part to guarantee the commercial profit and user experience of vehicle enterprises.

With regard to the activation of software services, the scheme for software service subscription and activation in the related art provides a single way for activation by users. However, in an application scenario in a vehicle, a user may activate multiple clients, such as a mobile phone-side APP function, a cloud-side service, and an vehicle-side application, etc., so that the support of terminal-cloud integration is needed. In addition, in the vehicle industry, a cloud-side activation system is decoupled from a vehicle-side activation system. Therefore, a vehicle-side function must be subscribed and activated with the vehicle on-line, which requires coordinated activation of the terminal side and the cloud side at the architecture level. Service activation for vehicles still uses the concept of service activation for devices such as mobile phones, which does not fit the special application scenarios of vehicles. It is therefore desirable to provide a management method applicable in service activation scenarios. Therefore, in service-oriented activation, there is an urgent need for a terminal-cloud integrated activation process to guarantee the profits and management of enterprises and also meet the needs of users to enjoy services.

To solve these problems, embodiments of the present application, which will be described in detail below, propose a service activation management method, a service activation management apparatus, an electronic device, a computer-readable storage medium, and a computer program product.

Referring to Fig. 2, Fig. 2 is a flowchart illustrating a service activation management method in accordance with an exemplary embodiment of the present application. The method may be applied in the implementation environment shown in Fig. 1 and specifically executed by the server 102 in the implementation environment. It is to be understood that the method is also applicable in other exemplary implementation environments and may be performed by devices in other implementation environments, and that the present embodiment does not limit the implementation environments in which the method is applicable.

As shown in Fig. 2, in an exemplary embodiment, the service activation management method includes at least steps S201 to S203, which are described in detail as follows.

At step S201, service activation information of a target vehicle is acquired, and cloud-side activation information and vehicle-side activation information are generated according to the service activation information.

At step S202, a cloud-side supporting service of a vehicle-side service is activated based on the cloud-side activation information.

At step S203, if the cloud-side supporting service is successfully activated, a vehicle-side service activation instruction for activating the vehicle-side service of the target vehicle is generated according to the vehicle-side activation information, so as to manage service activation of the target vehicle.

First, it is to be noted that the target vehicle may be one or more vehicles selected by a person skilled in the art, which is not limited herein. The service activation information may be generated based on a service request order which is placed by a client or a vehicle (vehicle side) accessing a preset order system. For example, a user subscribes to and pays a service on a preset digital product ordering system for an intelligent connected vehicle (ICV digital product ordering system), and then a service request order is generated. A cloud-side service subscription and activation system (server) at the cloud side processes the service request order for subscription and activation, extracts service the activation information from the service request order, and splits the service activation information into cloud-side activation information to be executed by the cloud side and vehicle-side activation information to be executed by the vehicle side.

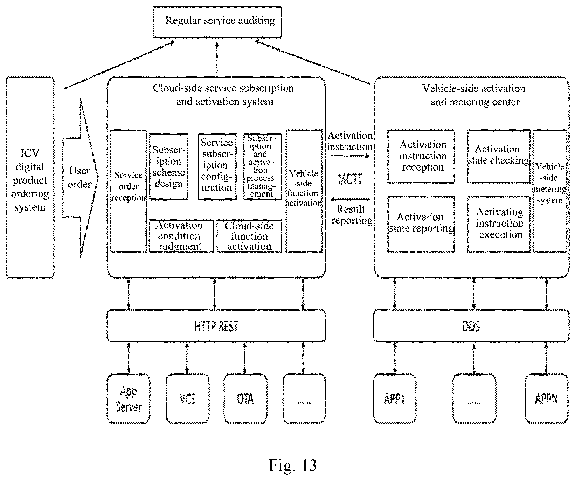

In an alternative embodiment, the method described in this embodiment may be applied to a cloud-side service subscription and activation system (cloud-side service subscription and activation apparatus) as shown in Fig. 13.

In an alternative embodiment, the service activation information may include user information (at least one of target vehicle information, client information, order customer information, etc.), design information, and related configuration information. The service activation information indicates the user subscribing to the service as well as the invoking and cooperation methods of the service. The service activation information also indicates the vehicle-side service and the cloud-side supporting service corresponding to the service activation information, and then these services may be activated to enable the function subscription of the vehicle.

In an alternative embodiment, the cloud-side activation information and vehicle-side activation information may be generated according to the service activation information in the following way:
service activation information is extracted from a service request order, and the service activation information is split into a plurality of work orders according to a preset subscription work order template, where the work orders include a cloud-side work order and a vehicle-side work order, where the cloud-side activation information is recorded in the cloud-side work order, and the vehicle-side activation information is recorded in the vehicle-side work order.

After obtaining the service activation information, the cloud side may also first feed back a message confirming the order reception to the preset order system, so that the preset order system knows that the service request order has been successfully sent.

In the above-mentioned method, the service request order may be split by the cloud side into a part to be executed by the vehicle side and a part to be executed by the cloud side, so that cloud-side activation is decoupled form vehicle-side activation to meet the requirements of the special application scenario of service activation.

In an alternative embodiment, the step that a vehicle-side service activation instruction for activating the vehicle-side service of the target vehicle is generated based on the vehicle-side activation information, includes:
a vehicle start state of the target vehicle is acquired; and
if the vehicle start state includes startup, it is triggered to generate the vehicle-side service activation instruction according to the vehicle-side activation information.

A service (function) of the vehicle side must be subscribed and activated with the vehicle under Internet connection (on-line), so that coordinated subscription and activation of the vehicle side, the cloud side and the client side at the acquisition level is required. Therefore, before the vehicle-side service activation instruction is generated, the start state of the target vehicle may be checked, and when the target vehicle is in the startup state, that is to say, it can be considered that the target vehicle is under Internet connection, the generation of the vehicle-side activation message is triggered.

The cloud-side supporting service include, but is not limited to, an available state of the vehicle-side function, etc. With the cloud-side configuration corresponding to the vehicle-side service, it can be ensured that the vehicle-side service can be normally executed at the vehicle side.

The vehicle-side service is activated at the cloud side first, and then activated at the vehicle side, thereby preventing the problem that when a service request order has been configured at the vehicle side and the user has been fed back the completion of the order, the cloud-side service is not activated at the cloud side due to various reasons, and the user cannot get the corresponding service using a vehicle-side service interface, etc., resulting in unsatisfactory use experience by no response. When the vehicle is in the startup state, the cloud-side supporting service of the vehicle-side service is activated, and then the vehicle-side service of the vehicle side is correspondingly configured. Therefore, the vehicle-side service and the cloud-side supporting service are activated with a small difference in activation time to be better coordinated, providing better use experience for the customer.

In an alternative embodiment, the step that a cloud-side supporting service of a vehicle-side service is activated based on the cloud-side activation information, includes at least one of:
a service upgrade package of the vehicle-side service is determined, and the service upgrade package is installed to enable the target vehicle to activate the vehicle-side service; and
a service interface of the vehicle-side service is controlled to be enabled.

It is to be noted that vehicle-oriented services may be divided into two types, namely, stand-alone services and interface services. An exemplary stand-alone service refers to that a cloud side needs to push the latest service installation program package (service upgrade package) to a vehicle side via OTA technology, and the vehicle side or a mobile phone side has to install a client to get a corresponding service. In this case, the cloud-side supporting service includes but is not limited to, preparing a service upgrade package required for the execution of the vehicle-side service in advance, so that the service upgrade package can be pushed in time, and the target vehicle can activate corresponding functions more quickly. Every operation information of the service may also be communicated to the cloud side or the vehicle-side, as the operation conditions and number, duration, etc. need to be recorded.

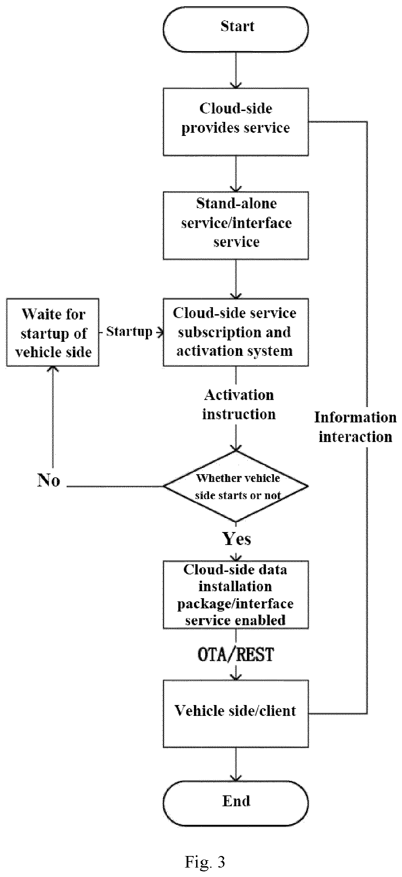

An exemplary interface service does not need to push a data installation package, and an interface of the vehicle-side service may be configured in advance but disabled, or not displayed. In this case, it only needs to configure the corresponding interface of the mobile phone-side or the vehicle-side to be enabled at the cloud side or to be displayed at the vehicle end, then when the vehicle side or the user side receives a request base on the interface, the request can be correctly responded. Such services need to interact with the cloud at any time, meaning that some functions need to be executed at the cloud side. For example, when a user queries some statistical information, a client sends a statistical request to the cloud side, and the cloud side then returns information back. Other cases are also possible, such as positioning information, a large data calculation service, a recommendation service, etc. For example, see Fig. 3, which is a flowchart illustrating two service activation processes in accordance with an exemplary embodiment of the present application. As shown in Fig. 3, after the cloud-side supporting service is activated, at least one of a stand-alone service and an interface service may be provided. After the vehicle side is startup, a vehicle-side service activation instruction (the activation instruction in Fig. 3) is generated, and a service upgrade package (the cloud-side data installation package in Fig. 3) for the vehicle-side service is issued, and the target vehicle is controlled to display a service interface (the interface service activation in Fig. 3) of the vehicle-side service. The service upgrade package is issued to at least one of the vehicle side and the client through at least one of the OTA upgrade technology or the REST protocol. The cloud side, the vehicle side and the client may also perform information interaction so as to enable the activation states of the whole system consistent. The above-mentioned vehicle-side service activation instruction may be sent via a cloud-side service subscription and activation system.

In an alternative embodiment, the method further includes a step that service activation information is written into a preset database for subsequent viewing by associated personnel, and for subsequent retrieval of information such as the number and duration of service calls.

In an alternative embodiment, after a vehicle-side service activation instruction for activating the vehicle-side service of the target vehicle is generated based on the vehicle-side activation information, the method further includes:
a service use request by the target vehicle for the vehicle-side service is acquired, and use parameters of the vehicle-side service are determined. In another alternative embodiment, if the activation result includes activation failed, the method may further include a step that the user is notified of the failure of the service activation and fed back with a reason of the failure. The reason of the failure may be preset with unified contents by a person skilled in the art, or a step where the failure occurs may be determined according to the execution process of the above-mentioned steps, and then the reason of the failure is determined based on a preset failure step-reason mapping relationship. The reason of the failure may also be determined using other methods known to those skilled in the art.

If the use parameters satisfy a preset use condition, the vehicle-side service is started. In this case, the activation state of the current vehicle-side service will remain unchanged.

If the use parameters do not satisfy the preset use condition, a user is prompted to renew service subscription, and a next service activation action is determined according to a renewal result of service subscription.

The renewal result of service subscription includes renewed or not renewed.

In an alternative embodiment, the step that a next service activation action is determined according to a renewal result of service subscription, includes:
if the renewal result of service subscription includes renewed, new service activation information is generated to activate the vehicle-side service again; and
if the renewal result of service subscription includes not renewed, a deactivation message is generated to disable the vehicle-side service.

The use parameters may be set by a person skilled in the art according to needs, including, but not limited to, the service time, the number of uses, etc., and the preset use conditions may correspond to a preset duration, a preset number of uses, etc.

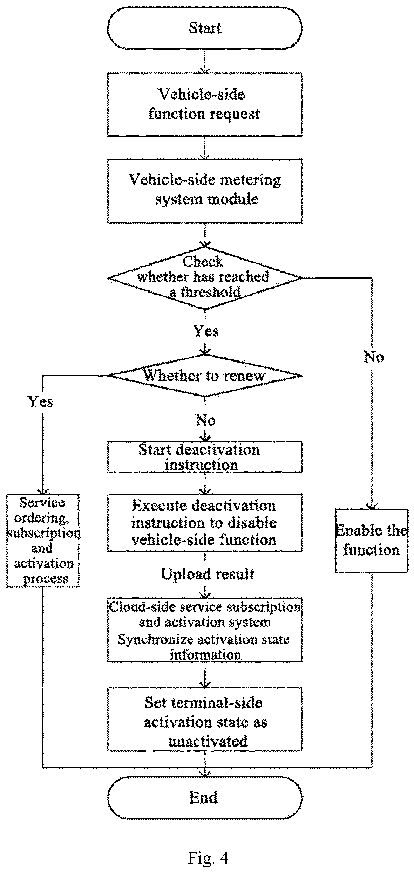

For example, see Fig 4, which is another flowchart illustrating a service activation management method in accordance with an exemplary embodiment of the present application; As shown in Fig. 4, every time the vehicle side (target vehicle) uses the corresponding vehicle-side service, the vehicle side may issue a service use request, and check whether the vehicle-side service has been activated. A preset database stores the conditions of subscribed services of each vehicle (the data in the preset database can be called by a vehicle-side metering system module shown in the figure). It may be checked whether a vehicle has reached a threshold. If a vehicle has reached a threshold (the service time, the number of uses, etc., exceed a preset use threshold) (the use parameters does not satisfy a preset use condition), a user may be asked whether to renew the subscription (prompting a user to renew service subscription). If the subscription is renewed (the renewal result of service subscription includes renewed), return to a service subscription and activation process to carry out activation again. If the subscription is not renewed (the renew result of service subscription includes not renewed), an activation center may perform deactivation (function disabled), and actively execute a deactivation instruction (deactivation message) to disable a corresponding function at the vehicle side of the user (disable a vehicle-side service), and synchronize the disabled information to the cloud-side service subscription and activation system. When the user uses the function next time, the user will be informed that the service is disabled and the subscription needs to be renewed and paid. If the vehicle has not reached a threshold, the vehicle-side service may be started (the function is enabled).

According to the service activation management method provided in the embodiments described above as shown in Figs. 2-4, service activation information is acquired and split into cloud-side activation information and vehicle-side activation information; a cloud-side supporting service of a vehicle-side service is activated according to the cloud-side activation information; and if an activation result of the cloud-side supporting service includes activation completed (the cloud-side supporting service is successfully activated), a vehicle-side service activation instruction for activating the vehicle-side service of the target vehicle is generated according to the vehicle-side activation information, so as to manage the service activation of the target vehicle. In this way, unsatisfactory user experience caused by asynchronous activation of vehicle-side and cloud-side services can be prevented, thereby better fitting the needs of the application scenario of vehicle service subscription.

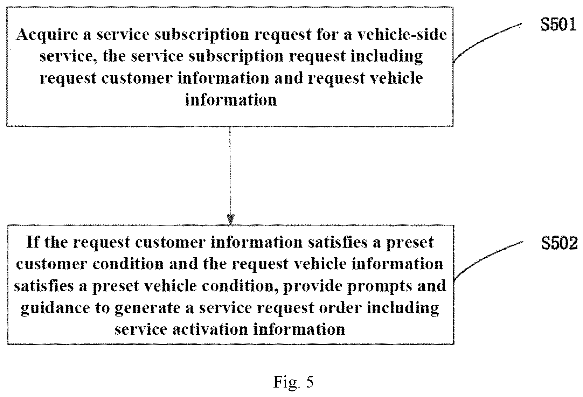

Referring to Fig. 5, which is a flowchart illustrating a service activation management method in accordance with another exemplary embodiment of the present application. The method may be applied in the implementation environment shown in Fig. 1, and specifically executed by a preset order system installed on at least one of a client, a server or a vehicle in the implementation environment. It is to be understood that the method is also applicable in other exemplary implementation environments and may be performed by devices in other implementation environments, and that the present embodiment does not limit the implementation environments in which the method is applicable.

As shown in Fig. 5, in an exemplary embodiment, the another service activation management method includes at least steps S501 to S502, which are described in detail as follows.

At step S501, a service subscription request for a vehicle-side service is acquired, the service subscription request including request customer information and request vehicle information.

At step S502, if the request customer information satisfies a preset customer condition and the request vehicle information satisfies a preset vehicle condition, prompts and guidance are provided to generate a service request order including service activation information.

In an alternative embodiment, the method described in this embodiment may be applied to a digital product ordering system for an intelligent connected vehicle (digital product ordering apparatus for an intelligent connected vehicle) as shown in Fig. 13.

In an alternative embodiment, the method shown in Fig. 5 may be prior to step S201, and may serve as an alternative means of obtaining service activation information, and in this case, a service request order may be generated via steps S501 and S502, and service activation information may be determined based on the service request order. It is to be noted that the service activation information may be directly recorded in the service request order, or the corresponding service activation information may be determined based on information such as an order type and an order identifier of the service request order.

The request customer information may be information about an initiator of the service subscription request, or information about a current owner of the vehicle to which the service subscription request is directed, for example, identity information of the owner of the vehicle, a membership grade in the preset order system, etc. The request vehicle information may be related information of the vehicle to which the service subscription request is directed, including, but not limited to, a vehicle model, version information of the current related service, historical subscription information of a service , vehicle configuration information, etc. Based on the above-mentioned request customer information and request vehicle information, the current conditions of the vehicle and the client can be known, and then they are compared with preset client conditions and preset vehicle conditions for subscribing to the service, so as to verify whether the client and the vehicle satisfy the environment requirements for implementing the service. Only when the above-mentioned conditions are satisfied, the service can be activated. Then the customer is guided to a next step, i.e., to make a payment, to generate a service request order. The service request order includes service activation information, thereby facilitating the subsequent activation of the service.

In an alternative embodiment, the vehicle-side service can be understood as a commodity, and the vehicle-side service can be subscribed, which means that the development of the commodity corresponding to the vehicle-side service has been completed. Before the commodity is shelved, relevant configuration needs to be performed through a cloud-side subscription configuration and activation template, and then the commodity is shelved to an digital product subscription system for an intelligent connected vehicle (ICV digital product subscription system) (preset order system), and the cloud side writes the information into a preset database. Thereafter, a user can browse services and their details through a terminal side, such as a mobile phone side APP and a vehicle-side APP, and order and pay a commodity via the ICV digital product subscription system. After the payment is successfully completed, the system will generate a user order and send it to the cloud-side service subscription and activation system for processing. For the implementation of service subscription, firstly, a developed service commodity is shelved. The information of each service, including the service type (specific service), service mode (monthly payment/yearly payment/pay-per-click, etc.), service price (the price for subscribing the corresponding service), and shelving status, needs to be recorded in a preset database. In addition, each service needs to be configured by a subscription and activation module, including configuration of subscribing nodes, configuration of parameters for subscription. Besides, the shelving of a service needs to meet some conditions. If the service is a stand-alone software application service, a data installation package is needed. If the service is an interface service, interface parameter information is needed. The specific information of each service needs to be recorded in a cloud database (which may be the preset database or other database). The above-mentioned specific information includes, but is not limited to, the service type of the vehicle-side service, vehicle types that the vehicle-side service can be provided to, basic configuration and attribute information of the specific vehicle type, preconditions for a user to purchase the specific service (for example, the integrity of user information, verification of user identity, current service status of the user, etc.), and preconditions for a vehicle side to purchase the service (current software version of the vehicle side, vehicle condition information, vehicle status, traffic information, location information, etc.). In this way, each vehicle-side service can be accurately defined for specific available users and vehicle sides, and the service can be directed to users and vehicle sides meeting the specific conditions for subscribing a corresponding function. Each vehicle-side service on the shelf corresponds to its own data information (preset customer conditions and preset vehicle conditions) in the database. The cloud side maintains this database, and back-end engineers may update or change the commodity information at the cloud side, and may also shelve new commodities or unshelve old commodities. The cloud-side service subscription and activation system may be displayed at the front end of the terminal side via the REST framework, so that a user can view and browse information of various commodities at the terminal side (the client or vehicle side). After the configuration is completed, the commodity shelving information also needs to be deployed in the ICV digital product ordering system (preset order system) for users to subscribe and purchase.

For example, a user may first visit the ICV digital product ordering system via a client to subscribe to his/her favorite functions. The user needs to select a service mode, and the front end may present subscription information, including the service type, service mode (monthly payment/yearly payment/pay-per-click/pay-per-time, etc.), service price, user information, etc. and request the user to confirm the information, etc., and request the user to confirm the information and pay. After the payment is successfully completed, the system may generate a user order and record relevant information. The user order may be uploaded to the cloud-side service subscription and activation system.

Before the user order is generated, a judgement module needs to judge a series of subscription conditions. The judgement module judges the preconditions for subscription and activation, and determines whether a user satisfies the conditions for subscription, so as to ensure that the user can smoothly receive the service after the payment. Take the case of version upgrade as an example, if the user now wants to upgrade to version 3.0, the precondition is that the service must be of version 2.0; if the user currently has a version 1.0, the subscription cannot be directly upgraded to version 3.0. Such judgement process is required to determine whether the user is allowed to place an order decision. When a user requests a subscription, user information and vehicle-side information are uploaded to the cloud side for the judgement of subscription conditions. Firstly, the vehicle type of the user, the current condition of the vehicle, whether or not the vehicle has been purchased, and whether or not the service matches with the current vehicle type configuration of the user, etc., are firstly judged. The judgement is completed either at the user mobile phone side or at the cloud-side by cooperation with information interaction. Only when the user satisfies the subscription conditions, the user is allowed to pay the subscription via the ICV digital product ordering system, and subscription and activation may be carried out.

By means of the method provided in Fig. 5, it can be ensured that the vehicle-side service corresponding to the service request order placed by the user can be implemented with the configuration of the target vehicle to be upgraded, so as to prevent that the order cannot be executed due to reasons such as insufficient vehicle configuration or insufficient user level after ordering, affecting the customer experience.

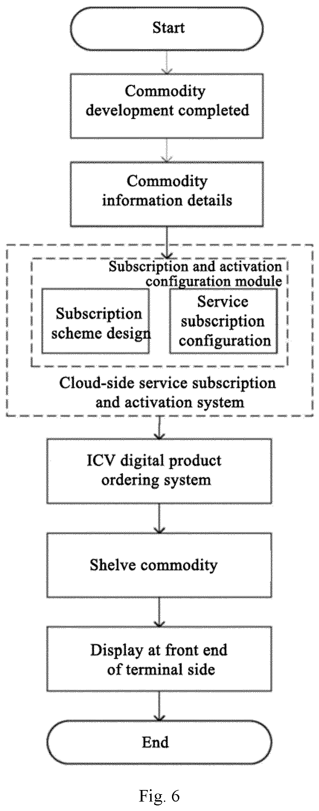

Referring to Fig. 6, which is a flowchart illustrating service shelving in accordance with an exemplary embodiment of the present application. As shown in Fig. 6, after the development of a commodity corresponding to a vehicle-side service is completed, the detail information of the commodity is completed, including, but not limited to, service type, service mode (package year/package month/pay-per-time/pay-per-time, etc.), service price, preset customer conditions corresponding to the service, preset vehicle conditions, etc. Subscription plan design and service subscription configuration, in particular, configuration of a subscription and activation module, are performed in a cloud-side service subscription and activation system, so as to add the commodity to the ICV digital product ordering system. Thus, the shelving of the commodity is completed, and the commodity shelved may be displayed at the front end at the terminal side for a customer to select and purchase. The terminal side includes, but is not limited to, at least one of a client and a vehicle side. That is, a client may purchase a corresponding commodity by accessing a vehicle-side service in the preset order system on a device such as a mobile terminal of a client, and may also purchase the corresponding commodity by accessing the vehicle-side service in the preset order system on a vehicle-mounted terminal device of the vehicle side, so as to generate a corresponding order.

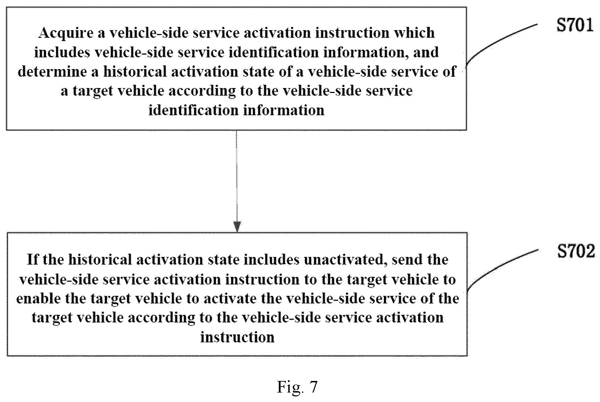

Referring to Fig. 7, which is a flowchart illustrating a service activation management method in accordance with another exemplary embodiment of the present application. The method may be applied in the implementation environment shown in Fig. 1 and specifically executed by the server in the implementation environment. It is to be understood that the method is also applicable in other exemplary implementation environments and may be performed by devices in other implementation environments, and that the present embodiment does not limit the implementation environments in which the method is applicable.

As shown in Fig. 7, in an exemplary embodiment, the another service activation management method includes at least steps S701 to S702, which are described in detail as follows.

At step S701, a vehicle-side service activation instruction, which includes vehicle-side service identification information, is acquired, and a historical activation state of a vehicle-side service of a target vehicle is determined according to the vehicle-side service identification information.

At step S702, if the historical activation state includes unactivated, the vehicle-side service activation instruction is sent to the target vehicle to enable the target vehicle to activate the vehicle-side service of the target vehicle according to the vehicle-side service activation instruction.

The vehicle-side service activation instruction may be the vehicle-side service activation instruction mentioned in the method shown in Figs. 2-4, or may be a vehicle-side service activation instruction provided by other means by a person skilled in the art. Based on the vehicle-side service activation instruction, it can be known which vehicle-side service needs to be activated currently. There is a case that a service may be repeatedly subscribed, and in order to prevent this situation, a historical activation state of the vehicle-side service may be determined first, and if the historical activation state is already activated, then an activated feedback may be sent to the cloud side. If the historical activation state is unactivated, the vehicle-side service is activated. With regard to the historical activation state and the subsequent vehicle-side activation result, the historical activation state is a state of the vehicle-side service of the target vehicle before the current vehicle-side service activation instruction is received, and the vehicle-side activation result is a state of the vehicle-side service of the target vehicle after the vehicle-side service activation instruction is executed by the target vehicle.

In an alternative embodiment, the method described in this embodiment may be applied to a vehicle-side activation and metering center (vehicle-side activation apparatus) of the system shown in Fig. 13.

In an alternative embodiment, the step that the vehicle-side service of the target vehicle is activated according to the vehicle-side service activation instruction, includes at least one of:
a service upgrade package of the vehicle-side service is acquired, and the service upgrade package is controlled to be installed on the target vehicle so as to activate the vehicle-side service; and
a service interface of the vehicle-side service is controlled to be operational.

In an alternative embodiment, after receiving the vehicle-side service activation instruction, the vehicle-side may also feed back a response on the reception of the vehicle-side service activation instruction to the cloud side to confirm that the vehicle-side service activation instruction has been received. It is possible that a user may subscribe and activate a vehicle-side function (vehicle-side service) via a mobile phone side (client), but the vehicle is not started at that time. In this case, the cloud side may update the activation only when it detects that the vehicle has been started after the vehicle is started, and then the reception of the activation instruction (vehicle-side service activation instruction) may be confirmed.

By checking the activation state of the corresponding function (vehicle-side service) of the vehicle (target vehicle), the activation state of the service function of the vehicle side is detected again, so as to ensure the consistency with the cloud information and prevent the repeated subscription by the user.

For example, the vehicle-side service activation instruction may arrive at the vehicle side through DDS (Data Distribute Service), and a vehicle-side related function APP (service interface) may be activated. Similar to cloud-side activation, it includes two activation modes: a stand-alone activation mode, which requires cooperation of the cloud side which issues a prepared data installation package (service upgrade package) to the vehicle side, and an interface activation mode, which enables a functional interface corresponding to the vehicle side to be operational.

In an alternative embodiment, after the vehicle-side service of the target vehicle is activated according to the vehicle-side service activation instruction, the method further includes at least one of:
a vehicle-side activation result of the vehicle-side service is acquired and sent, the vehicle-side activation result including activation completed or activation failed;
if the vehicle-side service is to be used, a function use request is sent and a vehicle-side function activation state of the vehicle-side function is acquired, and if the vehicle-side function activation state includes activated, the vehicle-side service is executed; and
use parameters of the vehicle-side service acquired, and stored in a preset data storage space. The use parameters are the same as the use parameter mentioned in the above embodiments, and will not be described in detail here.

For example, the vehicle side may report the activation result, and if the corresponding function is activated successfully, the information state of activation completed is reported, and if the activation fails, the information of activation failed is also be returned. The activation state information may be returned to the cloud-side service subscription and activation system (cloud side) to update the state of corresponding information in the database. If the activation fails, the payment may be returned to the user, and the user may be notified of the reason. All the information about vehicle-side activation may be stored in a database (preset data storage space) of a vehicle-side activation center. In addition, the specific parameters (use parameters) of the activation may be recorded in the vehicle-side metering system (preset data storage space), and the system may manage the conditions of each use by the user, and check whether the number of uses and service time, etc. exceed a threshold, so as to ensure the validity of the service and the profits of the enterprise.

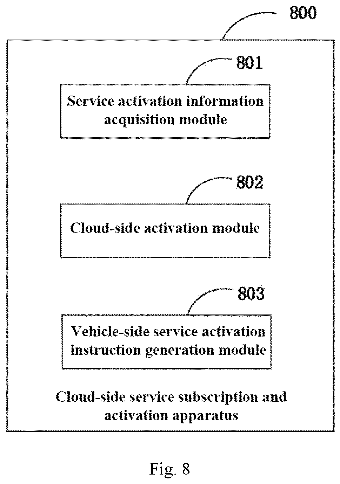

Fig. 8 is a block diagram of a cloud-side service subscription and activation apparatus in accordance with an exemplary embodiment of the present application. The apparatus may be applied in the implementation environment shown in Fig. 1, and is specifically configured in a server. The apparatus may also be applicable in other exemplary implementation environments and may be specifically configured in other devices, and this embodiment does not limit the implementation environment in which the apparatus is applicable.

As shown in Fig. 8, an exemplary cloud-side service subscription and activation apparatus 800 includes:
a service activation information acquisition module 801 configured to acquire service activation information of a target vehicle, and generate cloud-side activation information and vehicle-side activation information according to the service activation information;
a cloud-side activation module 802 configured to activate a cloud-side supporting service of a vehicle-side service based on the cloud-side activation information; and
a vehicle-side service activation instruction generation module 803 configured to generate a vehicle-side service activation instruction for activating the vehicle-side service of the target vehicle based on the vehicle-side activation information when the cloud-side supporting service is successfully activated, so as to manage service activation of the target vehicle.

It is to be noted that the cloud-side service subscription and activation apparatus provided in the above embodiment belongs to the same concept as the service activation management method provided in Figs. 2-4 of the embodiments described above, in which the specific operation modes of various modules and units have been described in detail in the method embodiments, and will not be described in detail here. In practical applications, the cloud-side service subscription and activation apparatus provided in the above embodiment can allocate the afore-mentioned functions to different functional modules according to needs, i.e., the internal structure of the apparatus is divided into different functional modules to implement all or part of the functions described above, which is not limited herein.

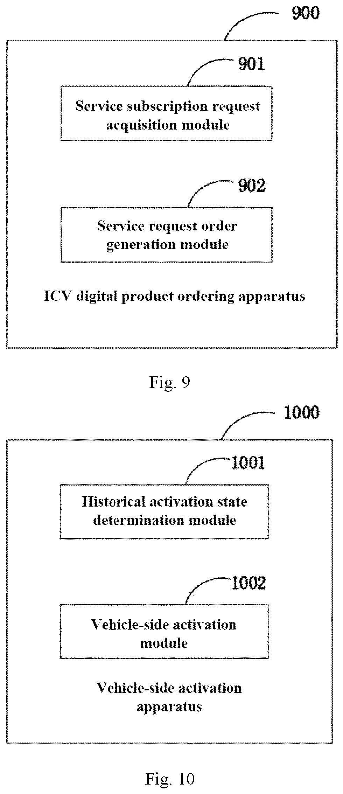

Fig. 9 is a block diagram of a digital product ordering apparatus for an intelligent connected vehicle in accordance with an exemplary embodiment of the present application. The apparatus may be applied in the implementation environment shown in Fig. 1, and is specifically configured in a server. The apparatus may also be applicable in other exemplary implementation environments and may be specifically configured in other devices, and this embodiment does not limit the implementation environment in which the apparatus is applicable.

As shown in Fig. 9, an exemplary ICV digital product ordering apparatus 900 includes:
a service subscription request acquisition module 901 configured to acquire a service subscription request for a vehicle-side service, the service subscription request including request customer information and request vehicle information; and
a service request order generation module 902 configured to, if the request customer information satisfies a preset customer condition and the request vehicle information satisfies a preset vehicle condition, provide prompts and guidance to generate a service request order including service activation information.

It is to be noted that the ICV digital product ordering apparatus provided in the above embodiment belongs to the same concept as the service activation management method provided in Figs. 5-6 of the embodiments described above, in which the specific operation modes of various modules and units have been described in detail in the method embodiments, and will not be described in detail here. In practical applications, the ICV digital product ordering apparatus provided in the above embodiment can allocate the afore-mentioned functions to different functional modules according to needs, i.e., the internal structure of the apparatus is divided into different functional modules to implement all or part of the functions described above, which is not limited herein.

Fig. 10 is a block diagram of an vehicle-side activation apparatus in accordance with an exemplary embodiment of the present application. The apparatus may be applied in the implementation environment shown in Fig. 1, and is specifically configured in a server. The apparatus may also be applicable in other exemplary implementation environments and may be specifically configured in other devices, and this embodiment does not limit the implementation environment in which the apparatus is applicable.

As shown in Fig. 10, an exemplary vehicle-side activation apparatus 1000 includes:
a historical activation state determination module 1001 configured to acquire a vehicle-side service activation instruction which includes vehicle-side service identification information, and determine a historical activation state of a vehicle-side service of a target vehicle according to the vehicle-side service identification information; and
a vehicle-side activation module 1002 configured to, if the historical activation state includes unactivated, send the vehicle-side service activation instruction to the target vehicle to enable the target vehicle to activate the vehicle-side service of the target vehicle according to the vehicle-side service activation instruction.

It is to be noted that the vehicle-side activation apparatus provided in the above embodiment belongs to the same concept as the service activation management method provided in Fig. 7 of the embodiments described above, in which the specific operation modes of various modules and units have been described in detail in the method embodiments, and will not be described in detail here. In practical applications, the vehicle-side activation apparatus provided in the above embodiment can allocate the afore-mentioned functions to different functional modules according to needs, i.e., the internal structure of the apparatus is divided into different functional modules to implement all or part of the functions described above, which is not limited herein.

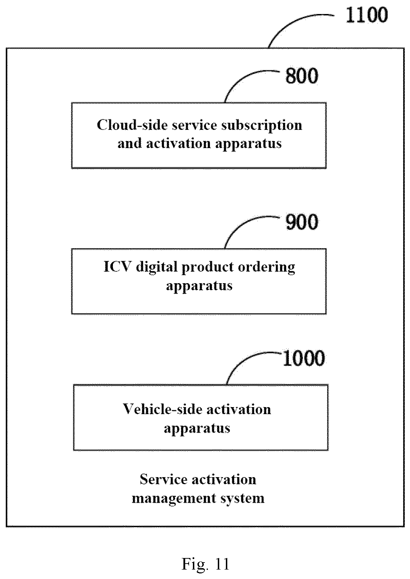

Fig. 11 is a block diagram of a service activation management system in accordance with an exemplary embodiment of the present application. The system may be applied in the implementation environment shown in Fig. 1. The system may also be applicable in other exemplary implementation environments and may be specifically configured in other devices, and this embodiment does not limit the implementation environment in which the system is applicable.

As shown in Fig. 11, the exemplary service activation management system 1100 includes at least one of:
the cloud-side service subscription and activation apparatus 800 as provided in Fig. 8, the ICV digital product ordering apparatus 900 as provided in Fig. 9, and the vehicle-side activation apparatus 1000 as described as provided in Fig. 10.

In an alternative embodiment, if the system includes the service activation management apparatus as shown in Figs. 8, 9 and 10, the system further includes:
an activation state acquisition module configured to acquire a cloud-side activation state of the cloud-side activation module as shown in Fig. 8, a service request order state of the service request order generation module as shown in Fig. 9, and a vehicle-side activation state of the vehicle-side activation module as shown in Fig. 10; and
an auditing module configured to, if the cloud-side activation state, the service request order state and the vehicle-side activation state are inconsistent, providing a prompt for checking or processing according to a preset processing rule.

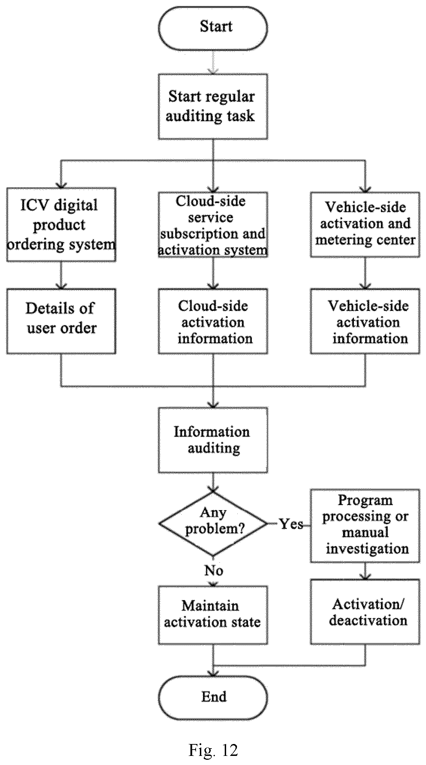

With the increase in the number of users, there will be more operational oversights in the data flow, capital flow and workflow, for example, oversights in personnel work, oversights in business management and oversights in system support. If income assurance is implemented, a service auditing process is required. For example, the information of three sides, i.e. the ICV digital product ordering system (the service activation management apparatus and the preset order system in Fig. 9), the cloud-side service subscription and activation system (the service activation management apparatus in Fig. 8) and the vehicle-side activation and metering center (the service activation management apparatus in Fig. 10), is regularly audited. The information of the ICV digital product ordering system, information of the cloud-side service subscription and activation system, and information of the vehicle-side activation and metering center are regularly summarized, and audited. The subscription and activation states and essential information of the subscription information at the three sides must be consistent. If there is inconsistency in the subscription and activation information at a certain side, it is necessary to perform program processing or manual investigation, and activate or deactivate a corresponding function according to the situation. If there is no abnormality, the current activation condition is maintained. The whole process is as shown in Fig. 12. Fig. 12 is a block diagram of a service activation management system in accordance with another exemplary embodiment of the present application. An enterprise can secure user rights and enterprise benefits by such a auditing process. Referring to Fig. 12, after a regular auditing task is started, the details of user orders of the ICV digital product ordering system (the state of a service request order, such as whether it is valid, whether it has been paid, whether it is within a service period specified in the order, whether the order is canceled or the period of the order is extended, etc.), cloud-side activation information of the cloud-side service subscription and activation system (cloud-side activation state, the activation state of the cloud-side supporting service at the auditing time of the auditing task), and vehicle-side activation information of the vehicle-side activation and metering center (vehicle-side activation state, the activation state of the vehicle-side service at the auditing time of the auditing task) are acquired, and audited to determine the consistency of the three (determining whether there is a problem), that is, to determine whether the cloud-side activation state, the vehicle-side activation state and the state of the service request order are all activated or not activated (if the order is valid, it can be understood that it is activated, and if the order is invalid and expired, it is considered as not activated), which indicates they are consistent, otherwise inconsistent. If there is no problem, the current activation condition state is maintained (activated or not activated). If there is any problem, it is checked by a preset program or manual investigation, and the vehicle-side service is activated or deactivated according to the results of investigation. Here, the activation may be understood as modifying the state of the vehicle-side service to be enabled, and the deactivation may be understood as modifying the vehicle-side service from enabled to disabled.

**In** an alternative embodiment, the system further includes at least one of a service shelving module, a client, and a target vehicle, wherein:
the service shelving module is configured to record service information of a vehicle-side service, and configure the cloud-side activation module and the vehicle-side activation module so that the cloud-side activation module activates a cloud-side supporting service of the vehicle-side service according to cloud-side activation information, and the vehicle-side activation module activates the vehicle-side service of the target vehicle according to a vehicle-side service activation instruction;
the client is configured to perform at least one of displaying commodity information of the vehicle-side service, and enabling a user to confirm a service request order, pay an order and view use parameters;
the target vehicle is configured to activate the vehicle-side service according to the vehicle-side service activation instruction.

The service information includes, but is not limited to, the service type (specific service), service mode (monthly payment/yearly payment/pay-per-click, etc.), service price (the price for subscribing the corresponding service), vehicle types that the vehicle-side service can be provided to, basic configuration and attribute information of the specific vehicle type, preconditions for a user to purchase the specific service (for example, the integrity of user information, verification of user identity, current service status of the user, etc.), and preconditions for a vehicle side to purchase the service (current software version of the vehicle side, vehicle condition information, vehicle status, traffic information, location information, etc.). The configuration of the cloud-side activation module and the vehicle-side activation module includes, but is not limited to, configuration of subscribing nodes, configuration of subscribing parameters, etc. The commodity information includes, but is not limited to, at least part of the service information, such as the service type (specific service), service mode (monthly payment/yearly payment/pay-per-click, etc.), service price (the price for subscribing the corresponding service), vehicle types that the vehicle-side service can be provided to, basic configuration and attribute information of the specific vehicle type, preconditions for a user to purchase the specific service (for example, the integrity of user information, verification of user identity, current service status of the user, etc.), and preconditions for a vehicle side to purchase the service (current software version of the vehicle side, vehicle condition information, vehicle status, traffic information, location information, etc.). The use parameters include, but are not limited to, service time, number of uses, remaining service length, remaining number of uses, etc.

It is to be noted that the service activation management system provided in the above embodiment belongs to the same concept as the service activation management method provided in the embodiments described above, in which the specific operation modes of various modules and units have been described in detail in the method embodiments, and will not be described in detail here. In practical applications, the service activation management apparatus provided in the above embodiment can allocate the afore-mentioned functions to different functional modules according to needs, i.e., the internal structure of the apparatus is divided into different functional modules to implement all or part of the functions described above, which is not limited herein.

Referring to Fig. 13, which is a block diagram of an an example of a service activation management system according to another exemplary embodiment of the present application. As shown in Fig. 13, the service activation management system can be understood as an terminal-cloud integrated subscription and activation system, providing a solution of "cloud + client", in which the cloud is a remote cloud server system, and the client includes terminal software under Internet connection, specifically a PC website, a mobile phone website, an APP, a iOS APP, a WeChat applet, a smart watch APP, a smart car APP, and other smart hardware applications. The client implements a display layer based on different operating systems, and the server takes a cloud-side activation system as the core whose system architecture includes a terminal side and a cloud side which perform information interaction through the REST framework. As shown in Fig. 13, the terminal-cloud integrated subscription and activation system is mainly divided into three parts. The first part is a ICV digital product ordering system (a preset order system, which can execute the method as described in any one of Figs. 5 and 6, an ICV digital product ordering apparatus) for a user to subscribe to and pay a service on this system, and then an order is generated. The second part is a cloud-side service subscription and activation system at the cloud side (which can execute the method described in any one of the embodiments of Figs. 2-4, a cloud-side service subscription and activation apparatus) for processing a user order for subscription and activation and maintaining the whole subscription and activation information. The third part is a vehicle-side activation and metering center (which can execute the method described in any one of the embodiments of Fig. 7, a vehicle-side apparatus) for activating a vehicle-side function and managing activation information metered at the vehicle side. The whole business process includes four processes, i.e., a commodity shelving process, a user service ordering, subscription and activation process, a metering process during user use, and a service auditing process. The system further includes two processes, one is a vehicle-side metering process, which manages information such as the number of uses and the service time of a function used at the vehicle side. A service auditing module regularly audits the information of the three sides, i.e., the subscription system, the cloud side and the vehicle side.

An alternative terminal-cloud integrated subscription and activation process is specifically as follows.

### I. Commodity shelving process.

The development completion is a process of commodity shelving. Before the commodity is shelved, relevant configuration needs to be performed through a cloud-side service subscription and activation configuration template, and then the commodity is shelved to an digital product subscription system for an intelligent connected vehicle (ICV digital product subscription system), and the cloud side writes the information into a database. Thereafter, a user can browse services and their details through a terminal side, such as a mobile phone side APP and a vehicle-side APP, and order and pay a commodity via the ICV digital product subscription system. After the payment is successfully completed, the system will generate a user order and send it to the cloud-side service subscription and activation system for processing.

The information of each service, including the service type (specific service), service mode (monthly payment/yearly payment/pay-per-click, etc.), service price (the price for subscribing the corresponding service), and shelving status, needs to be recorded in a database. In addition, each service needs to be configured by a subscription and activation module, including configuration of subscribing nodes, configuration of parameters for subscription. For example, the shelving of a service needs to meet some conditions. If the service is a stand-alone software application service, a data installation package is needed. If the service is an interface service, interface parameter information is needed. The specific information of each service needs to be recorded in a cloud database. The specific information mainly includes the service type of the vehicle-side service, vehicle types that the vehicle-side service can be provided to, basic configuration and attribute information of the specific vehicle type, preconditions for a user to purchase the specific service (for example, the integrity of user information, verification of user identity, current service status of the user, etc.), and preconditions for a vehicle side to purchase the service (current software version of the vehicle side, vehicle condition information, vehicle status, traffic information, location information, etc.). In this way, each service can be accurately defined for specific available users and vehicle sides, and the service can be directed to users and vehicle sides meeting the specific conditions for subscribing a corresponding function. Each service on the shelf corresponds to its own data information in the database. The cloud side maintains this database, and back-end engineers may update or change the commodity information at the cloud side, and may also shelve new commodities or unshelve old commodities. The cloud-side service subscription and activation system may be displayed at the front end of the terminal side via the REST framework, so that a user can view and browse information of various commodities at the terminal side. After the configuration is completed, the commodity shelving information also needs to be deployed in the ICV digital product ordering system for users to subscribe and purchase. This part can also be implemented based on a subscription scheme design module and a service subscription configuration module in the system shown in Fig. 13.

### II. User service ordering, subscription and activation process.

A user service ordering, subscription and activation process is mainly divided into three steps, i.e., generation of a user order, processing at the cloud-side service subscription and activation system, and processing at the vehicle-side activation and metering center. The details are as follows.

### 1. Generation of user order.

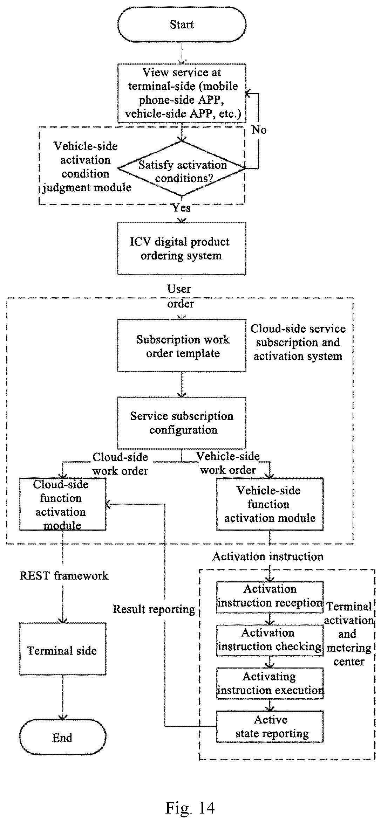

Referring to Fig. 14, which is a flowchart illustrating an example of a user service ordering, subscription and activation process in accordance with an exemplary embodiment of the present application. As shown in Fig. 14, a user may first visit the ICV digital product ordering system via a client to subscribe to his/her favorite functions. The user needs to select a service mode, and the front end may present subscription information, including the service type, service mode (monthly payment/yearly payment/pay-per-click/pay-per-time, etc.), service price, user information, etc. and request the user to confirm the information, etc., and request the user to confirm the information and pay. After the payment is successfully completed, the system may generate a user order and record relevant information. The user order may be uploaded to the cloud-side service subscription and activation system.

Before the user order is generated, a vehicle-side activation condition judgement module needs to judge a series of subscription conditions. The vehicle-side activation condition judgement module judges the preconditions for subscription and activation, and determines whether a user satisfies the conditions for subscription, so as to ensure that the user can smoothly receive the service after the payment. For example, the method shown by Fig. 5 may be employed. Take the case of version upgrade as an example, if the user now wants to upgrade to version 3.0, the precondition is that the service must be of version 2.0; if the user currently has a version 1.0, the subscription cannot be directly upgraded to version 3.0. Such judgement process is required to determine whether the user is allowed to place an order decision. When a user requests a subscription, user information and vehicle-side information are uploaded to the cloud side for the judgement of subscription conditions. Firstly, the vehicle type of the user, the current condition of the vehicle, whether or not the vehicle has been purchased, and whether or not the service matches with the current vehicle type configuration of the user, etc., are firstly judged. The judgement is completed either at the user mobile phone side or at the cloud-side by cooperation with information interaction. Only when the user satisfies the subscription conditions, the user is allowed to pay the subscription via the ICV digital product ordering system, and subscription and activation may be carried out.

### 2. Processing at cloud service subscription and activation system.

Still referring to Fig. 14, the information of the user order is uploaded to the cloud-side service subscription and activation system (cloud-side service subscription and activation) at the cloud side, and the system firstly performs service order reception (the cloud-side service subscription and activation system may first confirm the reception of the service order, via a service order receiving section shown in the figure), then the user order is split into multiple work orders, and the cloud performs database entry management and subscription and activation process management on the order information. The work orders are sent to a cloud-side function activation module and a vehicle-side function activation module correspondingly. The cloud-side function activation module performs information interaction through an ingress side of the REST framework, and the vehicle-side function activation module sends an activation instruction (a vehicle-side service activation instruction) to the vehicle-side activation and metering center. For example, a service order is split into multiple work orders by a subscription work order template. Some work orders are issued to the vehicle side, while some work orders are processed at the cloud side, and the work orders are scheduled according to work order scheduling rules. The work orders at the cloud side is executed by the cloud function activation module, and all the user information, design information and relevant configuration information will be written into the database for recording and management. The terminal side can view the subscription information in detail using the information returned to the front end by the cloud side (the terminal side may be installed with relevant software such as App Server, VCS, OTA, etc.). The terminal side is an application based on a browser kernel, and only provides interface display and basic operations. The terminal side may be implemented using common languages, such as HTML, CSS and JavaScript. Specific data acquisition and complex calculation needs interaction with the cloud-side via a RESTful interface. REST interaction is a network system with a general architecture. Currently, RESTful method based on Web services is mainly used for communication, which directly transmits data through HTTP/HTTPS, so that the client and server can communicate through various computer program languages. With this technology, a user can view information such as the subscription and activation conditions, the remaining service time, the remaining number of uses, etc., and also, the vehicle side may request the cloud side, which may send software resources required for subscription and activation to the vehicle side via OTA (Over the air). The work orders to be executed at the vehicle side may be sent to the vehicle-side function activation module for processing, and the processed activation instruction is sent to the vehicle-side activation and metering center via MQTT (Message Queuing Telemetry Transport).

The detailed steps of the subscription and activation function at the cloud side requires cooperation of multiple modules. The service subscription configuration module specifies in advance the user subscribing to the service, the invoking method of the service and the cooperation method between the metering center and the subscription module. For vehicle-oriented services, according to the present disclosure, the services are divided into two types, as shown in Fig. 3, one is stand-alone services and the other is interface services. The so-called stand-alone service refers to that a cloud side needs to push the latest service installation program package to a vehicle side via OTA technology, and the vehicle side or a mobile phone side has to install a client to get a corresponding service. Every operation information of the service may also be communicated to the cloud side or the vehicle-side, as the operation conditions and number, duration, etc. need to be recorded. The second type is interface services. Such a service does not need the push of a data installation package, but only enables a corresponding function interface to be displayed on a mobile phone side or a vehicle side. Such services need to interact with the cloud at any time, meaning that some functions need to be executed at the cloud side. For example, when a user queries some statistical information, a client sends a statistical request to the cloud side, and the cloud side then returns information back. Other cases are also possible, such as positioning information, a large data calculation service, a recommendation service, etc.

### 3. Processing at vehicle-side activation and metering center.

The activation instruction of the cloud side is sent to the vehicle-side activation and metering center, and the center performs four steps of activation instruction reception, activation state checking, activation instruction execution, and activation state reporting. The activation result may be reported to the cloud database to update the activation state. The details are are follows.

The vehicle-side activation and metering center may process the activation instruction in four steps. The first step is to confirm whether an activation instruction is received. It is possible that a user may subscribe and activate a vehicle-side function via a mobile phone side, but the vehicle is not started at that time. In this case, the cloud side may update the activation only when it detects that the vehicle has been started after the vehicle is started, and then the reception of the activation instruction may be confirmed and the next step may be performed. The second step is to check the activation state of the corresponding function of the vehicle, and detect the activation state of the service function of the vehicle side again, so as to ensure the consistency with the cloud information and prevent the repeated subscription by the user. The third is to execute the corresponding activation instruction. The activation instruction may arrive at the vehicle side through DDS (Data Distribute Service), and a vehicle-side related function APP (APP1, ..., APPN in the figure) may be activated. Specifically, similar to the cloud-side subscription system, it includes two activation modes: a stand-alone activation mode, which requires cooperation of the cloud side which issues a prepared data installation package, and an interface activation mode, which enables a functional interface corresponding to the vehicle side. The fourth step is to report the activation result. If the corresponding function is activated successfully, the information state of activation completed is reported, and if the activation fails, the information of activation failed is also be returned. The activation state information (activation state (result) reporting) may be returned to the cloud-side service subscription and activation system (such as the subscription and activation process management module, wherein the module may record relevant information about the subscription and activation process, such as an activation result) to update the state of corresponding information in the database. If the activation fails, the payment may be returned to the user, and the user may be notified of the reason. The vehicle-side activation center may also manage the information of vehicle-side activation , and all the information about vehicle-side activation may be stored in a database of the vehicle-side activation center. In addition, the specific parameters of the activation may be recorded in the vehicle-side metering system, and the system may manage the conditions of each use by the user, and check whether the parameters exceed a threshold, so as to ensure the validity of the service and the profits of the enterprise.

### III. Metering process during user use

Every time the vehicle side uses the corresponding service, the vehicle side may issue a request to a vehicle-side activation center to check whether the information has been activated. A database of an end-of-vehicle metering system of an end-of-vehicle activation and metering center records the service subscription of each vehicle, when a certain vehicle arrival amount (usage duration, usage times, usage duration, etc. exceeds a subscription usage specified amount). The user will be asked whether to perform the renewal process, and if the renewal process is performed, the process will be returned to the service subscription and activation process for reactivation. If the subscription is not renewed, an activation center may perform deactivation, and actively execute a deactivation instruction to disable a corresponding function at the vehicle side of the user, and synchronize the disabled information to the cloud-side service subscription and activation system. When the user uses the function next time, the user will be informed that the service is disabled and the subscription needs to be renewed and paid.

### IV. Service audit process

With the increase in the number of users, there will be more operational oversights in the data flow, capital flow and workflow, for example, oversights in personnel work, oversights in business management and oversights in system support. If income assurance is implemented, a service auditing process is required. A service auditing model proposed by the present disclosure regularly audits the information of the three sides, i.e., the subscription system, the cloud side and the vehicle side. In this method, the information of the ordering system, information of the cloud side, and information of the vehicle side are regularly summarized, and audited. The subscription and activation states and essential information of the subscription information at the three sides must be consistent. If there is inconsistency in the subscription and activation information at a certain side, it is necessary to perform program processing or manual investigation, and activate or deactivate a corresponding function according to the situation. If there is no abnormality, the current activation condition is maintained. The whole process is as shown in Fig. 12. An enterprise can secure user rights and enterprise benefits by such a auditing process.

An embodiment of the present application further provides an electronic device including: one or more processors; a memory for storing one or more programs which, when executed by the one or more processors, cause the electronic device to implement the service activation management method as described in the embodiments described above.

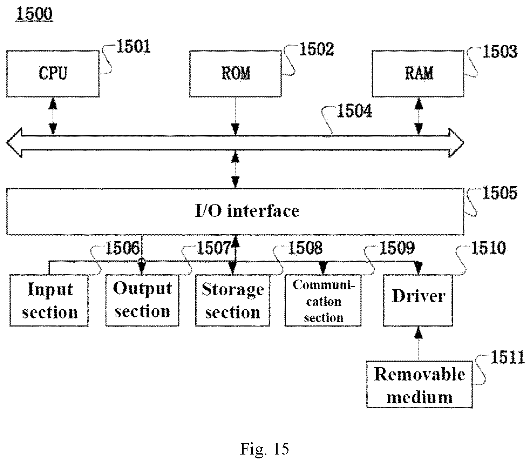

Fig. 15 illustrates a block diagram of a computer system suitable for implementing an electronic device in accordance with an embodiment of the present application. It is be noted that the computer system 1500 of the electronic device shown in Fig. 15 is only an example and should not impose any limitation on the scope of use or functionality of embodiments of the present application.

As shown in Fig. 15, a computer system 1500 includes a central processing unit (CPU) 1501 that may perform various appropriate actions and processes, such as performing the methods described in the embodiments above, according to programs stored in a read-only Memory (ROM) 1502 or loaded from a storage section 1508 into a random access memory (RAM) 1503. In the RAM 1503, various programs and data required for the operation of the system are also stored. The CPU 1501, the ROM 1502, and the RAM 1503 are connected to each other via a bus 1504. An Input/Output (I/O) interface 1505 is also coupled to bus 1504.

The following components are connected to the I/O interface 1505: an input section 1506 including a keyboard, a mouse, etc.; an output section 1507 such as a cathode ray tube (CRT), a liquid crystal display (LCD), a loudspeaker, etc.; a storage section 1508 including a hard disk, etc.; and a communication section 1509 including a network interface card such as a local area network (LAN) card, a modem, etc. The communication section 1509 performs communication via a network such as the Internet. A driver 1510 is also connected to the I/O interface 1505 as needed. A removable medium 1511, such as a magnetic disk, optical disk, magneto-optical disk, semiconductor memory, etc., is mounted on the driver 1510 as needed so that a computer program read therefrom is installed into the storage section 1508 as needed.

In particular, the processes described above with reference to the flowcharts may be implemented as a computer software program according to the embodiments of the present application. For example, an embodiment of the present application include a computer program product, including a computer program embodied on a computer-readable medium, the computer program containing a computer program for performing the method illustrated by the flowcharts. In such embodiments, the computer program may be downloaded and installed from a network via the communications portion 1509 and/or may be installed from the removable medium 1511. The computer program, when executed by the central processing unit (CPU) 1501, performs the various functions defined in the system of the present application.

It is to be noted that the computer-readable medium illustrated in the embodiments of the present application may be either a computer-readable signal medium or a computer-readable storage medium or any combinations thereof. The computer-readable storage medium may be, for example, an electronic, magnetic, optical, electromagnetic, infrared, or semiconductor system, apparatus, or device, or any combinations thereof. More specific examples of the computer-readable storage medium may include, but are not limited to: an electrical connection having one or more wires, a portable computer disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any suitable combinations thereof. In this application, a computer readable signal medium may include a data signal propagated in a baseband or as part of a carrier wave and carrying a computer program readable by a computer. Such propagated data signals may take many forms, including, but not limited to, electromagnetic signals, optical signals, or any suitable combinations thereof. The computer-readable signal medium may also be any computer-readable medium other than a computer-readable storage medium that can transmit, propagate, or deliver the program for use by or in connection with an instruction execution system, apparatus, or device. A computer program embodied on a computer-readable medium may be transmitted over any suitable medium including, but not limited to: wireless mediums, wired mediums, etc. or any suitable combinations thereof.

The flowcharts and block diagrams in the figures illustrate the architecture, functionality, and operation of possible implementations of systems, methods and computer program products according to various embodiments of the present application. Each block in the flowcharts or block diagrams may represent a module, segment, or portion of code, which includes one or more executable instructions for implementing the specified logical function(s). It is to be noted that in some alternative implementations, the functions noted in the blocks may occur out of the order noted in the figures. For example, two blocks shown in succession may in fact be executed substantially concurrently or the blocks may sometimes be executed in the reverse order, depending upon the functionality involved. It will also be noted that each block of the block diagrams or flowcharts, and combinations of blocks in the block diagrams or flowcharts, may be implemented by special purpose hardware-based systems which perform the specified functions or operations, or combinations of special purpose hardware and computer instructions.

The elements described in connection with the embodiments disclosed herein may be implemented in software or hardware, and may be provided in a processor. The names of these elements do not in some cases constitute a limitation on the elements themselves.

Another aspect of the present application further provides a computer-readable storage medium having stored thereon a computer program which, when executed by a processor of a computer, causes the computer to perform the service activation management method as described above. The computer-readable storage medium may be included in the electronic device described in the above embodiments or may exist separately without being fitted into the electronic device.

Another aspect of the present application further provides a computer program product or computer program including computer instructions stored in a computer readable storage medium. The processor of the computer device reads the computer instructions from the computer-readable storage medium, and the processor executes the computer instructions to cause the computer device to perform the service activation management method provided in the embodiments described above. each block of the block diagrams or flowcharts, and combinations of blocks in the block diagrams or flowcharts, may be implemented by special purpose hardware-based systems which perform the specified functions or operations, or combinations of special purpose hardware and computer instructions.

The elements described in connection with the embodiments disclosed herein may be implemented in software or hardware, and may be provided in a processor. The names of these elements do not in some cases constitute a limitation on the elements themselves.

Another aspect of the present application further provides a computer-readable storage medium having stored thereon a computer program which, when executed by a processor of a computer, causes the computer to perform the service activation management method as described above. The computer-readable storage medium may be included in the electronic device described in the above embodiments or may exist separately without being fitted into the electronic device.

Another aspect of the present application further provides a computer program product or computer program including computer instructions stored in a computer readable storage medium. The processor of the computer device reads the computer instructions from the computer-readable storage medium, and the processor executes the computer instructions to cause the computer device to perform the service activation management method provided in the embodiments described above.

The above examples merely illustrate the principles of the present disclosure and its efficacy and are not intended to limit the present disclosure. Modifications and variations of the embodiments described above may be made by those skilled in the art without departing from the scope of the invention covered by the claims of the present invention.

## Claims

1. A service activation management method, comprising:
acquiring service activation information of a target vehicle, and generating cloud-side activation information and vehicle-side activation information according to the service activation information;
activating a cloud-side supporting service of a vehicle-side service based on the cloud-side activation information; and
generating a vehicle-side service activation instruction for activating the vehicle-side service of the target vehicle based on the vehicle-side activation information when the cloud-side supporting service is successfully activated, so as to manage service activation of the target vehicle,
wherein after the generating a vehicle-side service activation instruction for activating the vehicle-side service of the target vehicle based on the vehicle-side activation information, the method further comprises:
acquiring a service use request by the target vehicle for the vehicle-side service, and determining use parameters of the vehicle-side service;
if the use parameters satisfy a preset use condition, starting the vehicle-side service; and
if the use parameters do not satisfy the preset use condition, prompting a user to renew service subscription, and determining a next service activation action according to a renewal result of service subscription, the renewal result of service subscription including renewed or not renewed.

2. The method according to claim 1, wherein the activating a cloud-side supporting service of a vehicle-side service based on the cloud-side activation information, comprises at least one of:
determining a service upgrade package of the vehicle-side service, and installing the service upgrade package to enable the target vehicle to activate the vehicle-side service; and
controlling a service interface of the vehicle-side service to be enabled.

3. The method according to claim 1, wherein the generating a vehicle-side service activation instruction for activating the vehicle-side service of the target vehicle based on the vehicle-side activation information, comprises:
acquiring a vehicle start state of the target vehicle; and
if the vehicle start state includes startup, triggering the generating a vehicle-side service activation instruction according to the vehicle-side activation information.

4. The method according to claim 1, wherein the determining a next service activation action according to a renewal result of service subscription, comprises:
if the renewal result of service subscription includes renewed, generating new service activation information to activate the vehicle-side service again; and
if the renewal result of service subscription includes not renewed, generating a deactivation message to disable the vehicle-side service.

5. The method according to claim 1, further comprising:
acquiring a service subscription request for a vehicle-side service, the service subscription request comprising request customer information and request vehicle information; and
if the request customer information satisfies a preset customer condition and the request vehicle information satisfies a preset vehicle condition, providing prompts and guidance to generate a service request order comprising service activation information.

6. The method according to claim 1, further comprising:
acquiring a vehicle-side service activation instruction which comprises vehicle-side service identification information, and determining a historical activation state of a vehicle-side service of a target vehicle according to the vehicle-side service identification information; and
if the historical activation state includes unactivated, sending the vehicle-side service activation instruction to the target vehicle to enable the target vehicle to activate the vehicle-side service of the target vehicle according to the vehicle-side service activation instruction.

7. The method according to claim 6, wherein the activating the vehicle-side service of the target vehicle according to the vehicle-side service activation instruction, comprises at least one of:
acquiring a service upgrade package of the vehicle-side service, and controlling the service upgrade package to be installed on the target vehicle so as to activate the vehicle-side service; and
controlling a service interface of the vehicle-side service to be operational.

8. The method according to claim 6 or 7, wherein after the activating the vehicle-side service of the target vehicle according to the vehicle-side service activation instruction, the method further comprises at least one of:
acquiring and sending a vehicle-side activation result of the vehicle-side service, the vehicle-side activation result including activation completed or activation failed;
if the vehicle-side service is to be used, sending a function use request and acquiring a vehicle-side function activation state of the vehicle-side function, and if the vehicle-side function activation state includes activated, executing the vehicle-side service; and
acquiring use parameters of the vehicle-side service, and storing the use parameters in a preset data storage space.

9. A service activation management system, comprising a cloud-side service subscription and activation apparatus,
wherein the apparatus comprises:
a service activation information acquisition module configured to acquire service activation information of a target vehicle, and generate cloud-side activation information and vehicle-side activation information according to the service activation information;
a cloud-side activation module configured to activate a cloud-side supporting service of a vehicle-side service based on the cloud-side activation information; and
a vehicle-side service activation instruction generation module configured to generate a vehicle-side service activation instruction for activating the vehicle-side service of the target vehicle based on the vehicle-side activation information when the cloud-side supporting service is successfully activated, so as to manage service activation of the target vehicle,
wherein the vehicle-side service activation instruction generation module is further configured for:
acquiring a service use request by the target vehicle for the vehicle-side service, and determining use parameters of the vehicle-side service;
if the use parameters satisfy a preset use condition, starting the vehicle-side service; and
if the use parameters do not satisfy the preset use condition, prompting a user to renew service subscription, and determining a next service activation action according to a renewal result of service subscription, the renewal result of service subscription including renewed or not renewed.

10. The system according to claim 9, further comprising a digital product ordering apparatus for an intelligent connected vehicle,
wherein the apparatus comprises:
a service subscription request acquisition module configured to acquire a service subscription request for a vehicle-side service, the service subscription request comprising request customer information and request vehicle information; and
a service request order generation module configured to, if the request customer information satisfies a preset customer condition and the request vehicle information satisfies a preset vehicle condition, provide prompts and guidance to generate a service request order comprising service activation information.

11. The system according to claim 9, further comprising a vehicle-side activation apparatus,
wherein the apparatus comprises:
a historical activation state determination module configured to acquire a vehicle-side service activation instruction which comprises vehicle-side service identification information, and determine a historical activation state of a vehicle-side service of a target vehicle according to the vehicle-side service identification information; and
a vehicle-side activation module configured to, if the historical activation state includes unactivated, send the vehicle-side service activation instruction to the target vehicle to enable the target vehicle to activate the vehicle-side service of the target vehicle according to the vehicle-side service activation instruction.

12. The system according to any of claims 9-11, wherein, the system further comprises:
an activation state acquisition module configured to acquire a cloud-side activation state of the cloud-side activation module according to claim 9, a service request order state of the service request order generation module according to claim 10, and a vehicle-side activation state of the vehicle-side activation module according to claim 11; and
an auditing module configured to, if the cloud-side activation state, the service request order state and the vehicle-side activation state are inconsistent, providing a prompt for checking or processing according to a preset processing rule.

13. The system according to any claims 9-11, wherein the system further comprises at least one of a service shelving module, a client, and a target vehicle, wherein:
the service shelving module is configured to record service information of a vehicle-side service, and configure the cloud-side activation module and the vehicle-side activation module so that the cloud-side activation module activates a cloud-side supporting service of the vehicle-side service according to cloud-side activation information, and the vehicle-side activation module activates the vehicle-side service of the target vehicle according to a vehicle-side service activation instruction;
the client is configured to perform at least one of displaying commodity information of the vehicle-side service, and enabling a user to confirm a service request order, pay an order and view use parameters;
the target vehicle is configured to activate the vehicle-side service according to the vehicle-side service activation instruction.

14. An electronic device, comprising:
one or more processors;
a memory for storing one or more programs which, when executed by the one or more processors, cause the electronic device to implement the service activation management method as claimed in any one of claims 1 to 8.

15. A computer-readable storage medium having stored thereon a computer program which, when executed by a processor of a computer, causes the computer to execute the service activation management method as claimed in any one of claims 1 to 8.

## Patentansprüche

1. Verfahren zur Handhabung einer Dienstaktivierung, umfassend
Erfassen von Dienstaktivierungsinformationen eines Zielfahrzeugs und Erzeugen von cloudseitigen Aktivierungsinformationen und fahrzeugseitigen Aktivierungsinformationen gemäß den Dienstaktivierungsinformationen;
Aktivieren eines cloudseitigen Unterstützungsdienstes eines fahrzeugseitigen Dienstes basierend auf den cloudseitigen Aktivierungsinformationen; und
Erzeugen einer fahrzeugseitigen Dienstaktivierungsanweisung zum Aktivieren des fahrzeugseitigen Dienstes des Zielfahrzeugs basierend auf den fahrzeugseitigen Aktivierungsinformationen, wenn der cloudseitige Unterstützungsdienst erfolgreich aktiviert ist, um so eine Dienstaktivierung des Zielfahrzeugs zu handhaben,
wobei nach dem Erzeugen einer fahrzeugseitigen Dienstaktivierungsanweisung zum Aktivieren des fahrzeugseitigen Dienstes des Zielfahrzeugs basierend auf den fahrzeugseitigen Aktivierungsinformationen, das Verfahren ferner Folgendes umfasst:
Erfassen einer Dienstverwendungsanfrage durch das Zielfahrzeug für den fahrzeugseitigen Dienst und Bestimmen von Verwendungsparametern des fahrzeugseitigen Dienstes;
wenn die Verwendungsparameter eine voreingestellte Verwendungsbedingung erfüllen, Starten des fahrzeugseitigen Dienstes; und
wenn die Verwendungsparameter eine voreingestellte Verwendungsbedingung nicht erfüllen, Auffordern eines Benutzers, die Dienstabonnierung zu erneuern, und Bestimmen einer nächsten Dienstaktivierungsaktion gemäß einem Erneuerungsergebnis der Dienstabonnierung wobei das Erneuerungsergebnis der Dienstabonnierung "erneuert" und "nicht erneuert" beinhaltet.

2. Verfahren gemäß Anspruch 1, wobei das Aktivieren eines cloudseitigen Unterstützungsdienstes eines fahrzeugseitigen Dienstes basierend auf den cloudseitigen Aktivierungsinformationen mindestens eines aus Folgendem umfasst:
Bestimmen eines Dienst-Upgradepakets des fahrzeugseitigen Dienstes und Installieren des Dienst-Upgradepakets, um das Zielfahrzeug dazu freizuschalten, den fahrzeugseitigen Dienst zu aktivieren; und
Steuern, dass eine Dienstschnittstelle des fahrzeugseitigen Dienstes freigeschaltet wird.

3. Verfahren gemäß Anspruch 1, wobei das Erzeugen einer fahrzeugseitigen Dienstaktivierungsanweisung zum Aktivieren des fahrzeugseitigen Dienstes des Zielfahrzeugs basierend auf den fahrzeugseitigen Aktivierungsinformationen Folgendes umfasst:
Erfassen eines Fahrzeugstartzustands des Zielfahrzeugs; und
wenn der Fahrzeugstartzustand Inbetriebnahme beinhaltet, Auslösen des Erzeugens einer fahrzeugseitigen Dienstaktivierungsanweisung gemäß den fahrzeugseitigen Aktivierungsinformationen.

4. Verfahren gemäß Anspruch 1, wobei das Bestimmen einer nächsten Dienstaktivierungsaktion gemäß einem Erneuerungsergebnis der Dienstabonnierung Folgendes umfasst:
wenn das Erneuerungsergebnis der Dienstabonnierung "erneuert" beinhaltet, Erzeugen von neuen Dienstaktivierungsinformationen, um den fahrzeugseitigen Dienst wieder zu aktivieren; und
wenn das Erneuerungsergebnis der Dienstabonnierung "nicht erneuert" beinhaltet, Erzeugen einer Deaktivierungsnachricht, um den fahrzeugseitigen Dienst abzuschalten.

5. Verfahren gemäß Anspruch 1, ferner umfassend:
Erfassen einer Dienstabonnierungsanfrage für einen fahrzeugseitigen Dienst, wobei die Dienstabonnierungsanfrage Anfrage-Kundeninformationen und Anfrage-Fahrzeuginformationen umfasst; und
wenn die Anfrage-Kundeninformationen eine voreingestellte Kundenbedingung erfüllen und die Anfrage-Fahrzeuginformationen eine voreingestellte Fahrzeugbedingung erfüllen, Bereitstellen von Aufforderungen und Anleitung, um eine Dienstanfragebestellung zu erzeugen, die Dienstaktivierungsinformationen umfasst.

6. Verfahren gemäß Anspruch 1, ferner umfassend:
Erfassen einer fahrzeugseitigen Dienstaktivierungsanweisung, die fahrzeugseitige Dienstidentifikationsinformationen umfasst, und Bestimmen eines historischen Aktivierungszustands eines fahrzeugseitigen Dienstes eines Zielfahrzeugs gemäß den fahrzeugseitigen Dienstidentifikationsinformationen; und
wenn der historische Aktivierungszustand "nicht aktiviert" beinhaltet, Senden der fahrzeugseitigen Dienstaktivierungsanweisung an das Zielfahrzeug, um das Zielfahrzeug dazu freizuschalten, den fahrzeugseitigen Dienst des Zielfahrzeugs gemäß der fahrzeugseitigen Dienstaktivierungsanweisung zu aktivieren.

7. Verfahren gemäß Anspruch 6, wobei das Aktivieren des fahrzeugseitigen Dienstes des Zielfahrzeugs gemäß der fahrzeugseitigen Dienstaktivierungsanweisung mindestens eines aus Folgendem umfasst:
Erfassen eines Dienst-Upgradepakets des fahrzeugseitigen Dienstes und Steuern, dass das Dienst-Upgradepaket auf dem Zielfahrzeug installiert wird, um so den fahrzeugseitigen Dienst zu aktivieren; und
Steuern, dass eine Dienstschnittstelle des fahrzeugseitigen Dienstes betriebsfähig ist.

8. Verfahren gemäß Anspruch 6 oder 7, wobei nach dem Aktivieren des fahrzeugseitigen Dienstes des Zielfahrzeugs gemäß der fahrzeugseitigen Dienstaktivierungsanweisung das Verfahren mindestens eines aus Folgendem umfasst:
Erfassen und Senden eines fahrzeugseitigen Aktivierungsergebnisses des fahrzeugseitigen Dienstes, wobei das fahrzeugseitige Aktivierungsergebnis "Aktivierung abgeschlossen" und "Aktivierung fehlgeschlagen" beinhaltet;
wenn der fahrzeugseitige Dienst verwendet werden soll, Senden einer Funktionsverwendungsanfrage und Erfassen eines fahrzeugseitigen Funktionsaktivierungszustands der fahrzeugseitigen Funktion, und wenn der fahrzeugseitige Funktionsaktivierungszustand "aktiviert" beinhaltet, Ausführen des fahrzeugseitigen Dienstes; und
Erfassen von Verwendungsparametern des fahrzeugseitigen Dienstes und Speichern der Verwendungsparameter in einem voreingestellten Datenspeicherraum.

9. System zur Handhabung einer Dienstaktivierung, umfassend: eine Einrichtung zur cloudseitigen Dienstabonnierung und -aktivierung,
wobei die Einrichtung Folgendes umfasst:
ein Dienstaktivierungsinformationen-Erfassungsmodul, das dazu konfiguriert ist, Dienstaktivierungsinformationen eines Zielfahrzeugs zu erfassen und cloudseitige Aktivierungsinformationen und fahrzeugseitige Aktivierungsinformationen gemäß den Dienstaktivierungsinformationen zu erzeugen;
ein Modul zur cloudseitigen Aktivierung, das dazu konfiguriert ist, einen cloudseitigen Unterstützungsdienst eines fahrzeugseitigen Dienstes basierend auf den cloudseitigen Aktivierungsinformationen zu aktivieren; und
ein Erzeugungsmodul für eine fahrzeugseitige Dienstaktivierungsanweisung, das dazu konfiguriert ist, eine fahrzeugseitige Dienstaktivierungsanweisung zum Aktivieren des fahrzeugseitigen Dienstes des Zielfahrzeugs basierend auf den fahrzeugseitigen Aktivierungsinformationen zu erzeugen, wenn der cloudseitige Unterstützungsdienst erfolgreich aktiviert ist, um so eine Dienstaktivierung des Zielfahrzeugs zu handhaben,
wobei das Erzeugungsmodul für eine fahrzeugseitige Dienstaktivierungsanweisung ferner konfiguriert ist zum
Erfassen einer Dienstverwendungsanfrage durch das Zielfahrzeug für den fahrzeugseitigen Dienst und Bestimmen von Verwendungsparametern des fahrzeugseitigen Dienstes;
wenn die Verwendungsparameter eine voreingestellte Verwendungsbedingung erfüllen, Starten des fahrzeugseitigen Dienstes; und
wenn die Verwendungsparameter eine voreingestellte Verwendungsbedingung nicht erfüllen, Auffordern eines Benutzers, die Dienstabonnierung zu erneuern, und Bestimmen einer nächsten Dienstaktivierungsaktion gemäß einem Erneuerungsergebnis der Dienstabonnierung wobei das Erneuerungsergebnis der Dienstabonnierung "erneuert" und "nicht erneuert" beinhaltet.

10. System gemäß Anspruch 9, ferner umfassend eine Einrichtung zur digitalen Produktbestellung für ein intelligentes verbundenes Fahrzeug,
wobei die Einrichtung Folgendes umfasst:
ein Dienstabonnierungsanfrage-Erfassungsmodul, das dazu konfiguriert ist, eine Dienstabonnierungsanfrage für einen fahrzeugseitigen Dienst zu erfassen, wobei die Dienstabonnierungsanfrage Anfrage-Kundeninformationen und Anfrage-Fahrzeuginformationen umfasst; und
ein Dienstanfragebestellung-Erzeugungsmodul, das dazu konfiguriert ist, wenn die Anfrage-Kundeninformationen eine voreingestellte Kundenbedingung erfüllen und die Anfrage-Fahrzeuginformationen eine voreingestellte Fahrzeugbedingung erfüllen, Aufforderungen und Anleitung bereitzustellen, um eine Dienstanfragebestellung zu erzeugen, die Dienstaktivierungsinformationen umfasst.

11. System gemäß Anspruch 9, ferner umfassend eine fahrzeugseitige Aktivierungseinrichtung,
wobei die Einrichtung Folgendes umfasst:
ein Modul zur Bestimmung eines historischen Aktivierungszustands, das dazu konfiguriert ist, eine fahrzeugseitige Dienstaktivierungsanweisung, die fahrzeugseitige Dienstidentifikationsinformationen umfasst, zu erfassen und einen historischen Aktivierungszustand eines fahrzeugseitigen Dienstes eines Zielfahrzeugs gemäß den fahrzeugseitigen Dienstidentifikationsinformationen zu bestimmen; und
ein Modul zur fahrzeugseitigen Aktivierung, das dazu konfiguriert ist, wenn der historische Aktivierungszustand "nicht aktiviert" beinhaltet, die fahrzeugseitige Dienstaktivierungsanweisung an das Zielfahrzeug zu senden, um das Zielfahrzeug dazu freizuschalten, den fahrzeugseitigen Dienst des Zielfahrzeugs gemäß der fahrzeugseitigen Dienstaktivierungsanweisung zu aktivieren.

12. System gemäß einem der Ansprüche 9 bis 11, das System ferner umfassend:
ein Aktivierungszustand-Erfassungsmodul, das dazu konfiguriert ist, einen cloudseitigen Aktivierungszustand des Moduls zur cloudseitigen Aktivierung gemäß Anspruch 9, einen Dienstanfragebestellungszustand des Dienstanfragebestellung-Erzeugungsmoduls gemäß Anspruch 10 und einen fahrzeugseitigen Aktivierungszustand des Moduls zur fahrzeugseitigen Aktivierung gemäß Anspruch 11 zu erfassen; und
ein Auditierungsmodul, das dazu konfiguriert ist, wenn der cloudseitige Aktivierungszustand, der Dienstanfragebestellungszustand und der fahrzeugseitige Aktivierungszustand inkonsistent sind, eine Aufforderung zum Prüfen oder Verarbeiten gemäß einer voreingestellten Verarbeitungsregel bereitzustellen.

13. System gemäß einem der Ansprüche 9 bis 11, wobei das System ferner mindestens eines aus einem Dienstzurückstellungsmodul, einem Klienten und einem Zielfahrzeug umfasst, wobei:
das Dienstzurückstellungsmodul dazu konfiguriert ist, Dienstinformationen eines fahrzeugseitigen Dienstes aufzuzeichnen und das Modul zur cloudseitigen Aktivierung und das Modul zur fahrzeugseitigen Aktivierung so zu konfigurieren, dass das Modul zur cloudseitigen Aktivierung einen cloudseitigen Unterstützungsdienst des fahrzeugseitigen Dienstes gemäß cloudseitigen Aktivierungsinformationen aktiviert und das Modul zur fahrzeugseitigen Aktivierung den fahrzeugseitigen Dienst des Zielfahrzeugs gemäß einer fahrzeugseitigen Dienstaktivierungsanweisung aktiviert;
der Klient dazu konfiguriert ist, mindestens eines aus Anzeigen von Gebrauchsgutinformationen des fahrzeugseitigen Dienstes und Freischalten eines Benutzers, um eine Dienstanfragebestellung zu bestätigen, eine Bestellung zu bezahlen und Verwendungsparameter einzusehen, durchzuführen;
das Zielfahrzeug dazu konfiguriert ist, den fahrzeugseitigen Dienstes gemäß der fahrzeugseitigen Dienstaktivierungsanweisung zu aktivieren.

14. Elektronische Vorrichtung, umfassend:
einen oder mehrere Prozessoren;
einen Speicher zum Speichern von einem oder mehreren Programmen, die bei ihrer Ausführung durch den einen oder die mehreren Prozessoren die elektronische Vorrichtung veranlassen, das Verfahren zur Handhabung einer Dienstaktivierung wie in einem der Ansprüche 1 bis 8 beansprucht durchzuführen.

15. Computerlesbares Speichermedium, das ein darauf gespeichertes Computerprogramm aufweist, das bei seiner Ausführung durch einen Prozessor eines Computers, den Computer veranlasst, das Verfahren zur Handhabung einer Dienstaktivierung wie in einem der Ansprüche 1 bis 8 beansprucht durchzuführen.

## Revendications

1. Procédé de gestion de l'activation d'un service, comprenant :
acquisition d'informations d'activation de service d'un véhicule cible, et génération des informations d'activation côté nuage et des informations d'activation côté véhicule conformément aux informations d'activation de service ;
activation d'un service de support côté nuage d'un service côté véhicule sur la base des informations d'activation côté nuage ; et
génération d'une instruction d'activation de service côté véhicule pour activer le service côté véhicule du véhicule cible sur la base des informations d'activation côté véhicule lorsque le service d'assistance côté cloud est activé avec succès, afin de gérer l'activation du service du véhicule cible,
dans lequel, après avoir généré une instruction d'activation du service côté véhicule pour activer le service côté véhicule du véhicule cible sur la base des informations d'activation côté véhicule, le procédé comprend en outre :
l'acquisition d'une demande d'utilisation de service par le véhicule cible pour le service côté véhicule, et la détermination des paramètres d'utilisation du service côté véhicule ;
si les paramètres d'utilisation satisfont à une condition d'utilisation prédéfinie, lors du démarrage du service côté véhicule ; et
si les paramètres d'utilisation ne satisfont pas aux conditions d'utilisation prédéfinies, lors de l'invitation de l'utilisateur à renouveler son abonnement au service et de la détermination d'une prochaine action d'activation du service en fonction du résultat du renouvellement de l'abonnement au service, le résultat du renouvellement de l'abonnement au service comprenant le renouvellement ou le non-renouvellement.

2. Procédé selon la revendication 1, dans lequel l'activation d'un service de soutien côté nuage d'un service côté véhicule sur la base des informations d'activation côté nuage, comprend au moins l'une des actions suivantes :
détermination d'un ensemble de mise à niveau du service côté véhicule, et installation de l'ensemble de mise à niveau afin de permettre au véhicule cible d'activer le service côté véhicule ; et
contrôle d'une interface de service du service côté véhicule à activer.

3. Procédé selon la revendication 1, dans lequel la génération d'une instruction d'activation du service côté véhicule pour activer le service côté véhicule du véhicule cible sur la base des informations d'activation côté véhicule, comprend :
l'acquisition d'un état de démarrage du véhicule cible ; et
si l'état de démarrage du véhicule inclut le démarrage, déclenchement de la génération d'une instruction d'activation du service côté véhicule conformément aux informations d'activation côté véhicule.

4. Procédé selon la revendication 1, dans lequel la détermination d'une prochaine action d'activation de service en fonction d'un résultat de renouvellement de l'abonnement au service comprend :
si le résultat du renouvellement de l'abonnement au service comprend le renouvellement, génération de nouvelles informations d'activation du service pour réactiver à nouveau le service côté véhicule ; et
si le résultat du renouvellement de l'abonnement au service comprend le non-renouvellement, génération d'un message de désactivation pour désactiver le service côté véhicule.

5. Procédé selon la revendication 1, comprenant en outre :
l'acquisition d'une demande d'abonnement à un service côté véhicule, la demande d'abonnement au service comprenant une demande d'informations sur le client et une demande d'informations sur le véhicule ; et
si les informations relatives à la demande du client satisfont à une condition prédéfinie et si les informations relatives à la demande du véhicule satisfont à une condition prédéfinie, fourniture d'invites et des conseils pour générer un ordre de demande de service comprenant des informations sur l'activation du service.

6. Procédé selon la revendication 1, comprenant en outre :
l'acquisition d'une instruction d'activation du service côté véhicule qui comprend des informations d'identification du service côté véhicule, et détermination d'un état d'activation historique d'un service côté véhicule d'un véhicule cible conformément aux informations d'identification du service côté véhicule ; et
si l'état d'activation historique comprend l'état non activé, l'envoi de l'instruction d'activation du service côté véhicule au véhicule cible pour permettre au véhicule cible d'activer le service côté véhicule du véhicule cible conformément à l'instruction d'activation du service côté véhicule.

7. Procédé selon la revendication 6, dans lequel l'activation du service côté véhicule du véhicule cible selon l'instruction d'activation du service côté véhicule comprend au moins l'un des éléments suivants :
acquisition d'un progiciel de mise à niveau du service côté véhicule, et contrôle de l'installation du progiciel de mise à niveau sur le véhicule cible afin d'activer le service côté véhicule ; et
contrôle d'une interface de service du service côté véhicule pour qu'elle soit opérationnelle.

8. Procédé selon la revendication 6 ou 7, dans lequel après l'activation du service côté véhicule du véhicule cible selon l'instruction d'activation du service côté véhicule, le procédé comprend en outre au moins l'un des éléments suivants :
l'acquisition et l'envoi d'un résultat d'activation côté véhicule du service côté véhicule, le résultat d'activation côté véhicule comprenant l'activation terminée ou l'activation échouée ;
si le service côté véhicule doit être utilisé, l'envoi d'une demande d'utilisation de la fonction et acquisition d'un état d'activation de la fonction côté véhicule, et si l'état d'activation de la fonction côté véhicule comprend activé, exécution du service côté véhicule ; et
l'acquisition de paramètres d'utilisation du service côté véhicule et le stockage des paramètres d'utilisation dans un espace de stockage de données prédéfini.

9. Système de gestion de l'activation des services, comprenant un appareil d'abonnement et d'activation des services côté nuage,
dans lequel l'appareil comprend :
un module d'acquisition d'informations d'activation de service configuré pour acquérir des informations d'activation de service d'un véhicule cible, et génération des informations d'activation côté nuage et des informations d'activation côté véhicule conformément aux informations d'activation de service ;
un module d'activation côté nuage configuré pour activer un service de support côté nuage d'un service côté véhicule sur la base des informations d'activation côté nuage ; et
un module de génération d'instructions d'activation du service côté véhicule configuré pour générer une instruction d'activation du service côté véhicule afin d'activer le service côté véhicule du véhicule cible sur la base des informations d'activation côté véhicule lorsque le service de support côté nuage est activé avec succès, de manière à gérer l'activation du service du véhicule cible,
dans lequel le module de génération d'instructions d'activation de service côté véhicule est en outre configuré pour :
l'acquisition d'une demande d'utilisation de service par le véhicule cible pour le service côté véhicule, et la détermination des paramètres d'utilisation du service côté véhicule ;
si les paramètres d'utilisation satisfont à une condition d'utilisation prédéfinie, lors du démarrage du service côté véhicule ; et
si les paramètres d'utilisation ne satisfont pas aux conditions d'utilisation prédéfinies, lors de l'invitation de l'utilisateur à renouveler son abonnement au service et de la détermination d'une prochaine action d'activation du service en fonction du résultat du renouvellement de l'abonnement au service, le résultat du renouvellement de l'abonnement au service comprenant le renouvellement ou le non-renouvellement.

10. Le système selon la revendication 9, comprenant en outre un appareil de commande de produits numériques pour un véhicule connecté intelligent,
dans lequel l'appareil comprend :
un module d'acquisition de demande d'abonnement à un service configuré pour acquérir une demande d'abonnement à un service côté véhicule, la demande d'abonnement à un service comprenant une demande d'informations sur le client et une demande d'informations sur le véhicule ; et
un module de génération d'ordre de demande de service configuré afin de, dans le cas que les informations de la demande du client satisfassent à une condition prédéfinie du client et que les informations de la demande du véhicule satisfassent à une condition prédéfinie du véhicule, fournir des invites et des conseils pour générer un ordre de demande de service comprenant des informations sur l'activation du service.

11. Le système selon la revendication 9, comprenant en outre un appareil d'activation côté véhicule,
dans lequel l'appareil comprend :
un module de détermination de l'état d'activation historique configuré pour l'acquisition d'une instruction d'activation du service côté véhicule qui comprend des informations d'identification du service côté véhicule, et détermination d'un état d'activation historique d'un service côté véhicule d'un véhicule cible conformément aux informations d'identification du service côté véhicule ; et
un module d'activation côté véhicule configuré, si l'état d'activation historique comprend l'état non activé, l'envoi de l'instruction d'activation du service côté véhicule au véhicule cible pour permettre au véhicule cible d'activer le service côté véhicule du véhicule cible conformément à l'instruction d'activation du service côté véhicule.

12. Le système selon l'une des revendications 9 à 11, dans lequel le système comprend en outre :
un module d'acquisition d'état d'activation configuré pour acquérir un état d'activation côté nuage du module d'activation côté nuage selon la revendication 9, un état d'ordre de demande de service du module de génération d'ordre de demande de service selon la revendication 10, et un état d'activation côté véhicule du module d'activation côté véhicule selon la revendication 11 ; et
un module d'audit configuré pour, si l'état d'activation côté nuage, l'état de l'ordre de demande de service et l'état d'activation côté véhicule ne sont pas cohérents, la fourniture d'une invite à la vérification ou au traitement selon une règle de traitement prédéfinie.

13. Le système selon les revendications 9 à 11, dans lequel le système comprend en outre au moins un module de rayonnage de service, un client et un véhicule cible :
le module d'étagère de service est configuré pour enregistrer les informations de service d'un service côté véhicule, et pour configurer le module d'activation côté nuage et le module d'activation côté véhicule de sorte que le module d'activation côté nuage active un service de support côté nuage du service côté véhicule conformément aux informations d'activation côté nuage, et que le module d'activation côté véhicule active le service côté véhicule du véhicule cible en fonction d'une instruction d'activation du service côté véhicule ;
le client est configuré pour effectuer au moins l'une des opérations suivantes : afficher des informations sur les produits du service côté véhicule et permettre à un utilisateur de confirmer une demande de service, de payer une commande et de consulter les paramètres d'utilisation ;
le véhicule cible est configuré pour activer le service côté véhicule conformément à l'instruction d'activation du service côté véhicule.

14. Dispositif électronique comprenant :
un ou plusieurs processeurs ;
une mémoire pour stocker un ou plusieurs programmes qui, lorsqu'ils sont exécutés par un ou plusieurs processeurs, amènent le dispositif électronique à implémenter le procédé de gestion de l'activation des services tel que revendiquée dans l'une quelconque des revendications 1 à 8.

15. Support de stockage lisible par ordinateur sur lequel est stocké un programme informatique qui, lorsqu'il est exécuté par un processeur d'un ordinateur, amène l'ordinateur à exécuter le procédé de gestion de l'activation des services tel que revendiquée dans l'une quelconque des revendications 1 à 8.
